(19) Europäisches Patentamt
European Patent Office
Office européen des brevets

(11) **EP 4 133 850 B1**

(12) **EUROPEAN PATENT SPECIFICATION**

(45) Date of publication and mention
of the grant of the patent:
**10.12.2025  Bulletin 2025/50**

(21) Application number: **21719270.7**

(22) Date of filing: **08.04.2021**

(51) International Patent Classification (IPC):
**H04W 72/04** (2023.01)       **H04L 5/00** (2006.01)
**H04L 1/08** (2006.01)

(52) Cooperative Patent Classification (CPC):
**H04L 5/0053; H04L 1/08; H04L 5/0044;**
**H04L 5/0094; H04W 72/21**

(86) International application number:
**PCT/IB2021/052913**

(87) International publication number:
**WO 2021/205374 (14.10.2021 Gazette 2021/41)**

(54) **APPARATUS AND METHOD FOR COMMUNICATING A PUSCH INCLUDING UCI**

GERÄT UND VERFAHREN ZUR ÜBERTRAGUNG EINES PUSCHS MIT UCI

APPAREIL ET PROCÉDÉ DE COMMUNICATION SUR UN PUSCH COMPRENANT DES UCI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **09.04.2020   US 202063007940 P**

(43) Date of publication of application:
**15.02.2023  Bulletin 2023/07**

(60) Divisional application:
**25191698.7 / 4 614 848**

(73) Proprietor: **Lenovo (Singapore) Pte. Ltd.
New Tech Park 556741 (SG)**

(72) Inventors:
• **JUNG, Hyejung**
  **Northbrook, Illinois 60062 (US)**
• **NANGIA, Vijay**
  **Woodridge, Illinois 60517 (US)**
• **BAGHERI, Hossein**
  **Urbana, Illinois 61802 (US)**

(74) Representative: **Openshaw & Co.
8 Castle Street
Farnham, Surrey GU9 7HR (GB)**

• **HUAWEI ET AL:** "Corrections on PUSCH enhancement", vol. RAN WG1, no. 20200224 - 20200306, 15 February 2020 (2020-02-15), XP051853566, Retrieved from the Internet <URL:https://ftp.3gpp.org/tsg_ran/WG1_RL1/TSGR1_100_e/Docs/R1-2001028.zip R1-2001028.docx> [retrieved on 20200215]
• **PANASONIC:** "Remaining issues on URLLC PUSCH enhancement", vol. RAN WG1, no. e-Meeting; 20200224 - 20200306, 14 February 2020 (2020-02-14), XP051852934, Retrieved from the Internet <URL:https://ftp.3gpp.org/tsg_ran/WG1_RL1/TSGR1_100_e/Docs/R1-2000589.zip R1-2000589.docx> [retrieved on 20200214]
• **SAMSUNG:** "Remaining issues for PUSCH", vol. RAN WG1, no. e-Meeting; 20200224 - 20200306, 14 February 2020 (2020-02-14), XP051852968, Retrieved from the Internet <URL:https://ftp.3gpp.org/tsg_ran/WG1_RL1/TSGR1_100_e/Docs/R1-2000627.zip R1-2000627 Remaining issues for PUSCH.docx> [retrieved on 20200214]
• **WILUS INC:** "On UCI enhancement and intra-UE prioritization/multiplexing for NR URLLC", vol. RAN WG1, no. Prague, CZ; 20190826 - 20190830, 17 August 2019 (2019-08-17), XP051765974, Retrieved from the Internet <URL:http://www.3gpp.org/ftp/tsg_ran/WG1_RL1/TSGR1_98/Docs/R1-1909367.zip> [retrieved on 20190817]

(56) References cited:
**US-A1- 2019 306 922**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

• QUALCOMM INCORPORATED: "Remaining issues for multiplexing UCI on PUSCH", 2 March 2018 (2018-03-02), pages 1 - 13, XP051398252, Retrieved from the Internet <URL:http://www.3gpp.org/ftp/tsg%5Fran/WG1%5FRL1/TSGR1%5F92/Docs/>

# EP 4 133 850 B1

**Description**

BACKGROUND

1. Field

The present disclosure is directed to an apparatus and method for communicating a PUSCH including UCI.

2. Introduction

Presently, wireless communication devices, such as UEs, communicate with other communication devices using wireless signals. In 3GPP Rel-16 NR, an UL cancellation indication for inter-UE prioritization and multiplexing is specified for cancellation of PUSCH and SRS without taking into account priority of PUSCH and SRS. With limited indication granularity of time and frequency resources, some PUSCH or SRS transmission that needs to be protected may be cancelled and accordingly, enhancement on uplink cancellation indication may be needed. Also, in Rel-16 PUSCH repetition type B, some of actual repetitions may have very small number of REs due to segmentation around unavailable resources, and details of UCI multiplexing (e.g. multiplexing timeline conditions and which repetition to multiplex UCI) need to be developed.

US 2019/306922 A1 relates to methods to multiplex control information in accordance with multi-slot transmissions in New Radio (NR) systems. The reader is also referred to the following documents: (i) HUAWEI ET AL: "Corrections on PUSCH enhancement", 3GPP DRAFT, R1-2001028; (ii) PANASONIC: "Remaining issues on URLLC PUSCH enhancement", 3GPP DRAFT, R1-2000589; (iii) SAMSUNG: "Remaining issues for PUSCH", 3GPP DRAFT, R1-2000627; (iv) WILUS INC: "On UCI enhancement and intra-UE prioritization/ multiplexing for NR URLLC", 3GPP DRAFT, R1-1909367; and (v) QUALCOMM INCORPORATED: "Remaining issues for multiplexing UCI on PUSCH", 3GPP DRAFT, R1-1802839.

BRIEF DESCRIPTION OF THE DRAWINGS

In order to describe the manner in which advantages and features of the disclosure can be obtained, a description of the disclosure is rendered by reference to specific embodiments thereof which are illustrated in the appended drawings. These drawings depict only example embodiments of the disclosure and are not therefore to be considered to be limiting of its scope. The drawings may have been simplified for clarity and are not necessarily drawn to scale.

FIG. 1 is an example block diagram of a system according to a possible embodiment;
FIG. 2 is an example flowchart illustrating the operation of an apparatus according to a possible embodiment;
FIG. 3 is an example flowchart illustrating the operation of an apparatus according to a possible embodiment; and
FIG. 4 is an example block diagram of an apparatus according to a possible embodiment.

SUMMARY

The invention is set out in the appended set of claims..

DETAILED DESCRIPTION

Embodiments provide a method and apparatus for communicating on a wireless network. At least some embodiments can provide an apparatus and method for communicating a PUSCH including UCI. At least some embodiments can provide uplink control information multiplexing in PUSCH repetition and enhanced uplink cancellation indication. At least some embodiments can also provide an apparatus and methods to selectively apply UL cancellation. At least some embodiments can further provide an apparatus for and methods of UCI multiplexing in PUSCH repetition type A and type B.

According to a possible embodiment, a transceiver can receive scheduling information of at least one PUCCH and at least one PUSCH. The scheduling information can schedule the UE to transmit the at least one PUCCH and the at least one PUSCH. The at least one PUCCH can overlap with the at least one PUSCH in time. The at least one PUCCH can include at least one type of UCI. A controller can multiplex the at least one type of UCI in at least one actual repetition of a PUSCH of the at least one PUSCH. The transceiver can transmit the PUSCH including the multiplexed at least one type of UCI. The PUSCH can overlap with a PUCCH of the at least one PUCCH. The at least one actual repetition of the PUSCH can have a number of symbols no less than a predefined number of symbols.

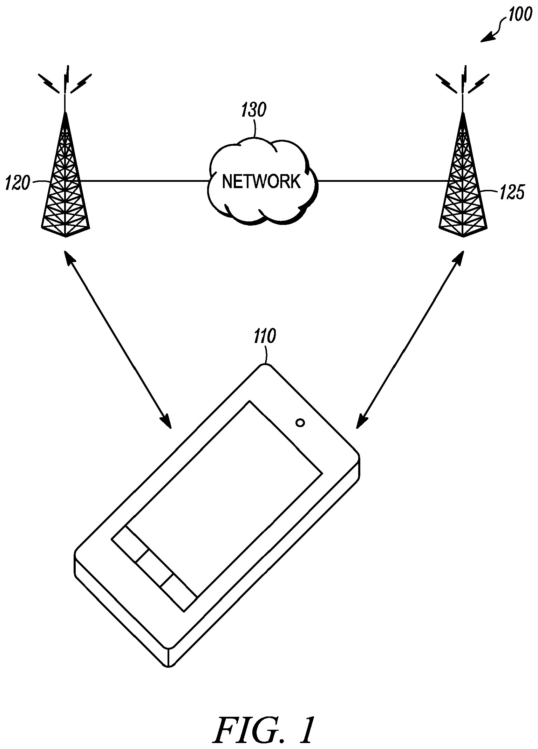

FIG. 1 is an example block diagram of a system 100 according to a possible embodiment. The system 100 can include a UE 110, at least one network entity 120 and 125, and a network 130. The UE 110 can be a wireless wide area network device, a user device, a wireless terminal, a portable wireless communication device, a smartphone, a cellular telephone, a flip phone, a personal digital assistant, a smartwatch, a personal computer, a tablet computer, a laptop computer, a selective call receiver, an IoT device, or any other user device that is capable of sending and receiving communication signals on a wireless network. The at least one network entity 120 and 125 can be a wireless wide area network base station, can be a NodeB, can be an eNB, can be a gNB, such as a 5G NodeB, can be an unlicensed network base station, can be an access point, can be a base station controller, can be a network controller, can be a TRP, can be a different type of network entity from the other network entity, and/or can be any other network entity that can provide wireless access between a UE and a network.

The network 130 can include any type of network that is capable of sending and receiving wireless communication signals. For example, the network 130 can include a wireless communication network, a cellular telephone network, a TDMA-based network, a CDMA-based network, an OFDMA-based network, an LTE network, a NR network, a 3GPP-based network, a 5G network, a satellite communications network, a high-altitude platform network, the Internet, and/or other communications networks.

In operation, the UE 110 can communicate with the network 130 via at least one network entity 120. For example, the UE 110 can send and receive control signals on a control channel and user data signals on a data channel.

For UCI reporting including HARQ-ACK feedback, based on 3GPP TS 38.213 V16.1.0 (2020-03), a UE procedure for reporting control information can be provided.

If a UE is configured with a SCG, the UE shall apply the procedures described in this clause for both MCG and SCG. When the procedures are applied for MCG, the terms 'secondary cell', 'secondary cells', 'serving cell', 'serving cells' in this clause refer to secondary cell, secondary cells, serving cell, serving cells belonging to the MCG respectively. When the procedures are applied for SCG, the terms 'secondary cell', 'secondary cells', 'serving cell', 'serving cells' in this clause refer to secondary cell, secondary cells (not including PSCell), serving cell, serving cells belonging to the SCG respectively. The term 'primary cell' in this clause refers to the PSCell of the SCG.

If a UE is configured with a PUCCH-SCell, the UE shall apply the procedures described in this clause for both primary PUCCH group and secondary PUCCH group. When the procedures are applied for the primary PUCCH group, the terms 'secondary cell', 'secondary cells', 'serving cell', 'serving cells' in this clause refer to secondary cell, secondary cells, serving cell, serving cells belonging to the primary PUCCH group respectively. When the procedures are applied for secondary PUCCH group, the terms 'secondary cell', 'secondary cells', 'serving cell', 'serving cells' in this clause refer to secondary cell, secondary cells (not including the PUCCH-SCell), serving cell, serving cells belonging to the secondary PUCCH group respectively. The term 'primary cell' in this clause refers to the PUCCH-SCell of the secondary PUCCH group.

If a UE is not provided *CORESETPoolIndex* or is provided *CORESETPoolIndex* with a value of 0 for first CORESETs on active DL BWPs of serving cells, and is provided *CORESETPoolIndex* with a value of 1 for second CORESETs on active DL BWPs of the serving cells, and is provided *ACKNACKFeedbackMode = SeparateFeedback,* the UE shall separately apply the procedures described in Clauses 9.1 and 9.2.3 for reporting HARQ-ACK information associated with the first CORESETs on active DL BWP of the serving cells and for reporting HARQ-ACK information associated with the second CORESETs on active DL BWP of the serving cells. HARQ-ACK information reporting is associated with a CORESET through a reception of a PDCCH with a DCI format triggering the reporting of the HARQ-ACK information by the UE.

For NR-DC when both the MCG and the SCG operate either in FR1 or in FR2 and for a power headroom report transmitted on the MCG or the SCG, the UE computes *PH* assuming that the UE does not transmit PUSCH/PUCCH on any serving cell of the SCG or the MCG, respectively.

If a UE is configured for NR-DC operation, the UE does not expect to be configured with a PUCCH-SCell.

A PUSCH or a PUCCH, including repetitions if any, can be of priority index 0 or of priority index 1. If a priority index is not provided for a PUSCH or a PUCCH, the priority index is 0. If in an active DL BWP a UE monitors PDCCH either for detection of DCI format 0_1 and DCI format 1_1 or for detection of DCI format 0_2 and DCI format 1_2, a priority index can be provided by a priority indicator field. If a UE indicates a capability to monitor, in an active DL BWP, PDCCH for detection of DCI format 0_1 and DCI format 1_1 and for detection of DCI format 0_2 and DCI format 1_2, a DCI format 0_1 or a DCI format 0_2 can schedule a PUSCH transmission of any priority and a DCI format 1_1 or a DCI format 1_2 can schedule a PDSCH reception and trigger a PUCCH transmission with corresponding HARQ-ACK information of any priority. If, after resolving overlapping for PUCCH and/or PUSCH transmissions of a same priority index, a UE determines to transmit a first PUCCH of larger priority index, a PUSCH or a second PUCCH of smaller priority index, and a transmission of the first PUCCH would overlap in time with a transmission of the PUSCH or the second PUCCH, the UE does not transmit the PUSCH or the second PUCCH; a PUSCH of larger priority index, a PUCCH of smaller priority index, and a transmission of the PUSCH would overlap in time with a transmission of the PUCCH, the UE does not transmit the PUCCH; a first PUSCH of larger priority index on a serving cell, a second PUSCH of smaller priority index on the serving cell, and a transmission of the first PUSCH would overlap in time with a transmission of the second PUSCH, the UE does not transmit the second PUSCH, where at least one of the two PUSCH is not scheduled by a DCI format.

In the remaining of this Clause, a UE multiplexes UCIs with same priority index in a PUCCH or a PUSCH. A PUCCH or a PUSCH is assumed to have a same priority index as a priority index of UCIs a UE multiplexes in the PUCCH or the PUSCH.

In the remaining of this Clause, if a UE is provided *subslotLength-ForPUCCH,* a slot for an associated PUCCH transmission includes a number of symbols indicated by *subslotLength-ForPUCCH.*

If a UE would transmit on a serving cell a PUSCH without UL-SCH that overlaps with a PUCCH transmission on a serving cell that includes positive SR information, the UE does not transmit the PUSCH.

If a UE would transmit CSI reports on overlapping physical channels, the UE applies the priority rules described in [6, TS 38.214] for the multiplexing of CSI reports.

If a UE has overlapping resources for PUCCH transmissions in a slot and at least one of the PUCCH transmissions is with repetitions over multiple slots, the UE first follows the procedures described in Clause 9.2.6 for resolving the overlapping among the resources for the PUCCH transmissions.

If a UE would multiplex UCI in a PUCCH transmission that overlaps with a PUSCH transmission, and the PUSCH and PUCCH transmissions fulfill the conditions in Clause 9.2.5 for UCI multiplexing, then the UE multiplexes only HARQ-ACK information, if any, from the UCI in the PUSCH transmission and does not transmit the PUCCH if the UE multiplexes aperiodic or semi-persistent CSI reports in the PUSCH; multiplexes only HARQ-ACK information and CSI reports, if any, from the UCI in the PUSCH transmission and does not transmit the PUCCH if the UE does not multiplex aperiodic or semi-persistent CSI reports in the PUSCH.

A UE does not expect to multiplex in a PUSCH transmission in one slot with SCS configuration $\mu_1$ UCI of same type that the UE would transmit in PUCCHs in different slots with SCS configuration $\mu_2$ if $\mu_1 < \mu_2$.

A UE does not expect a PUCCH resource that results from multiplexing overlapped PUCCH resources, if applicable, to overlap with more than one PUSCHs if each of the more than one PUSCHs includes aperiodic CSI reports.

A UE does not expect to detect a DCI format scheduling a PDSCH reception or a SPS PDSCH release and indicating a resource for a PUCCH transmission with corresponding HARQ-ACK information in a slot if the UE previously detects a DCI format scheduling a PUSCH transmission in the slot and if the UE multiplexes HARQ-ACK information in the PUSCH transmission.

If a UE multiplexes aperiodic CSI in a PUSCH and the UE would multiplex UCI that includes HARQ-ACK information in a PUCCH that overlaps with the PUSCH and the timing conditions for overlapping PUCCHs and PUSCHs in Clause 9.2.5 are fulfilled, the UE multiplexes only the HARQ-ACK information in the PUSCH and does not transmit the PUCCH.

If a UE transmits multiple PUSCHs in a slot on respective serving cells that include first PUSCHs that are scheduled by DCI formats and second PUSCHs configured by respective *ConfiguredGrantConfig* or *semiPersistentOn-PUSCH,* and the UE would multiplex UCI in one of the multiple PUSCHs, and the multiple PUSCHs fulfil the conditions in Clause 9.2.5 for UCI multiplexing, the UE multiplexes the UCI in a PUSCH from the first PUSCHs.

If a UE transmits multiple PUSCHs in a slot on respective serving cells and the UE would multiplex UCI in one of the multiple PUSCHs and the UE does not multiplex aperiodic CSI in any of the multiple PUSCHs, the UE multiplexes the UCI in a PUSCH of the serving cell with the smallest *ServCellIndex* subject to the conditions in Clause 9.2.5 for UCI multiplexing being fulfilled. If the UE transmits more than one PUSCHs in the slot on the serving cell with the smallest *ServCellIndex* that fulfil the conditions in Clause 9.2.5 for UCI multiplexing, the UE multiplexes the UCI in the earliest PUSCH that the UE transmits in the slot.

If a UE transmits a PUSCH over multiple slots and the UE would transmit a PUCCH with HARQ-ACK and/or CSI information over a single slot and in a slot that overlaps with the PUSCH transmission in one or more slots of the multiple slots, and the PUSCH transmission in the one or more slots fulfills the conditions in Clause 9.2.5 for multiplexing the HARQ-ACK and/or CSI information, the UE multiplexes the HARQ-ACK and/or CSI information in the PUSCH transmission in the one or more slots. The UE does not multiplex HARQ-ACK and/or CSI information in the PUSCH transmission in a slot from the multiple slots if the UE would not transmit a single-slot PUCCH with HARQ-ACK and/or CSI information in the slot in case the PUSCH transmission was absent.

If the PUSCH transmission over the multiple slots is scheduled by a DCI format that includes a DAI field, the value of the DAI field is applicable for multiplexing HARQ-ACK information in the PUSCH transmission in any slot from the multiple slots where the UE multiplexes HARQ-ACK information.

If a UE would multiplex HARQ-ACK information in a PUSCH transmission that is configured by a *ConfiguredGrantConfig,* or in an activated PUSCH transmission configured by *semiPersistentOnPUSCH,* and includes CG-UCI [5, TS 38.212], the UE multiplexes the HARQ-ACK information in the PUSCH transmission if the UE is provided *cg-CG-UCI-Multiplexing;* otherwise, the UE does not transmit the PUSCH and multiplexes the HARQ-ACK information in a PUCCH transmission or in another PUSCH transmission.

For time-domain resource for PUSCH repetition, from 3GPP TS 38.214 V16.1.0 (2020-03), 6.1.2.1 Resource allocation in time domain, when the UE is scheduled to transmit a transport block and no CSI report, or the UE is scheduled to transmit a transport block and a CSI report(s) on PUSCH by a DCI, the *Time domain resource assignment* field value *m* of the DCI provides a row index *m* + 1 to an allocated table. The determination of the used resource allocation table is defined in Clause 6.1.2.1.1. The indexed row defines the slot offset $K_2$, the start and length indicator *SLIV,* or directly the start symbol S and the allocation length *L,* the PUSCH mapping type, and the number of repetitions (if *numberofrepetitions* is present in the resource allocation table) to be applied in the PUSCH transmission.

For PUSCH scheduled by DCI format 0_1, if *PUSCHRepTypeIndicator-ForDCIFormat0_1* is set to *'pusch-RepTypeB',* the UE applies PUSCH repetition Type B procedure when determining the time domain resource allocation. For PUSCH scheduled by DCI format 0_2, if *PUSCHRepTypeIndicator-ForDCIFormat0_2* is set to *'pusch-RepTypeB',* the UE applies PUSCH repetition Type B procedure when determining the time domain resource allocation. Otherwise, the UE applies PUSCH repetition Type A procedure when determining the time domain resource allocation for PUSCH scheduled by PDCCH.

For PUSCH repetition Type A, the starting symbol S relative to the start of the slot, and the number of consecutive symbols *L* counting from the symbol S allocated for the PUSCH are determined from the start and length indicator *SLIV* of the indexed row: if $(L-1) \le 7$ then *SLIV* = 14·(*L* - 1) + *S, else SLIV* = 14·(14 -*L* + 1) + (14 - 1 - *S*), where $0 < L \le 14 - S$. For PUSCH repetition Type B, the starting symbol S relative to the start of the slot, and the number of consecutive symbols *L* counting from the symbol S allocated for the PUSCH are provided by *startSymbol* and *length* of the indexed row of the resource allocation table, respectively. For PUSCH repetition Type A, the PUSCH mapping type is set to Type A or Type B as defined in Clause 6.4.1.1.3 of [4, TS 38.211] as given by the indexed row. For PUSCH repetition Type B, the PUSCH mapping type is set to Type B. The UE shall consider the *S* and *L* combinations defined in table 6.1.2.1-1 as valid PUSCH allocations.

Table 6.1.2.1-1: Valid *S* and *L* combinations

| PUSCH mapping type | Normal cyclic prefix | | | Extended cyclic prefix | | |
|---|---|---|---|---|---|---|
| | *S* | *L* | *S+L* | *S* | *L* | *S+L* |
| Type A | 0 | {4,...,14} | {4,...,14} (repetitionType A only) | 0 | {4,...,12} | {4,...,12} |
| Type B | {0,...,13} | {1,...,14} | {1,...,14} for repetition Type A, {1,...,27} for repetition Type B | {0,..., 11} | {1,...,12} | {1,...,12} |

For PUSCH repetition Type A, when transmitting PUSCH scheduled by DCI format 0_1 or 0_2 in PDCCH with CRC scrambled with C-RNTI, MCS-C-RNTI, or CS-RNTI with NDI=1, the number of repetitions *K* is determined as if *numberofrepetitions* is present in the resource allocation table, the number of repetitions K is equal to *numberofrepetitions;* else if the UE is configured with *pusch-AggregationFactor,* the number of repetitions *K* is equal to *pusch-Aggregation-Factor;* otherwise *K = 1*.

For PUSCH repetition Type A, in case *K*> 1, the same symbol allocation is applied across the *K* consecutive slots and the PUSCH is limited to a single transmission layer. The UE shall repeat the TB across the *K* consecutive slots applying the same symbol allocation in each slot. The redundancy version to be applied on the *n*th transmission occasion of the TB, where n = 0, 1, ... *K*-1, is determined according to table 6.1.2.1-2.

Table 6.1.2.1-2: Redundancy version for PUSCH transmission

| *rv_id* indicated by the DCI scheduling the PUSCH | *rv_id* to be applied to *n*th transmission occasion (repetition Type A) or *n*th actual repetition (repetition Type B) | | | |
|---|---|---|---|---|
| | *n* mod 4 = 0 | *n* mod 4 = 1 | *n* mod 4 = 2 | *n* mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

For PUSCH repetition Type A, a PUSCH transmission in a slot of a multi-slot PUSCH transmission is omitted according to the conditions in Clause 11.1 of [6, TS38.213].

For PUSCH repetition Type B, the number of nominal repetitions is given by *numberofrepetitions.* For the *n*-th nominal repetition, *n = 0, ..., numberofrepetitions* - 1, the slot where the nominal repetition starts is given by

$$K_s + \left\lfloor \frac{S + n \cdot L}{N_{symb}^{slot}} \right\rfloor$$ , and the starting symbol relative to the start of the slot is given by $\mathrm{mod}\left(S + n \cdot L, N_{symb}^{slot}\right)$ ; the slot where the nominal repetition ends is given by $K_s + \left\lfloor \frac{S + (n+1) \cdot L - 1}{N_{symb}^{slot}} \right\rfloor$ , and the ending symbol relative to the start of the slot is

given by $\mathrm{mod}\left(S + (n+1) \cdot L - 1, N_{symb}^{slot}\right)$ .

Here $K_s$ is the slot where the PUSCH transmission starts, and $N_{symb}^{slot}$ is the number of symbols per slot as defined in Clause 4.3.2 of [4, TS38.211].

For PUSCH repetition Type B, the UE determines invalid symbol(s) for PUSCH repetition Type B transmission as follows:

A symbol that is indicated as downlink by *tdd-UL-DL-ConfigurationCommon* or *tdd-UL-DL-ConfigurationDedicated* is considered as an invalid symbol for PUSCH repetition Type B transmission.

The UE may be configured with the higher layer parameter *InvalidSymbolPattern,* which provides a symbol level bitmap spanning one or two slots (higher layer parameter *symbols* given by *InvalidSymbolPattern*). A bit value equal to 1 in the symbol level bitmap *symbols* indicates that the corresponding symbol is an invalid symbol for PUSCH repetition Type B transmission. The UE may be additionally configured with a time-domain pattern (higher layer parameter *periodicityAndPattern* given by *InvalidSymbolPattern*), where each bit of *periodicityAndPattern* corresponds to a unit equal to a duration of the symbol level bitmap *symbols,* and a bit value equal to 1 indicates that the symbol level bitmap *symbols* is present in the unit. The *periodicityAndPattern* can be {1, 2, 4, 5, 8, 10, 20 or 40} units long, but maximum of 40ms. The first symbol of *periodicityAndPattern* every 40ms/P periods is a first symbol in frame *nf* mod 4 = 0, where P is the duration of *periodicityAndPattern* in units of ms. When *periodicityAndPattern* is not configured, for a symbol level bitmap spanning two slots, the bits of the first and second slots correspond respectively to even and odd slots of a radio frame, and for a symbol level bitmap spanning one slot, the bits of the slot correspond to every slot of a radio frame. If *InvalidSymbolPattern* is configured, when the UE applies the invalid symbol pattern is determined as follows:

If the PUSCH is scheduled by DCI format 0_1, or corresponds to a Type 2 configured grant activated by DCI format 0_1, and if *InvalidSymbolPatternIndicator-ForDCIFormat0_1* is configured, if invalid symbol pattern indicator field is set 1, the UE applies the invalid symbol pattern; otherwise, the UE does not apply the invalid symbol pattern.

If the PUSCH is scheduled by DCI format 0_2, or corresponds to a Type 2 configured grant activated by DCI format 0_2, and if *InvalidSymbolPatternIndicator-ForDCIFormat0_2* is configured, if invalid symbol pattern indicator field is set 1, the UE applies the invalid symbol pattern; otherwise, the UE does not apply the invalid symbol pattern; otherwise, the UE applies the invalid symbol pattern.

For PUSCH repetition Type B, after determining the invalid symbol(s) for PUSCH repetition type B transmission for each of the K nominal repetitions, the remaining symbols are considered as potentially valid symbols for PUSCH repetition Type B transmission. If the number of potentially valid symbols for PUSCH repetition type B transmission is greater than zero for a nominal repetition, the nominal repetition consists of one or more actual repetitions, where each actual repetition consists of a consecutive set of potentially valid symbols that can be used for PUSCH repetition Type B transmission within a slot. An actual repetition with a single symbol is omitted except for the case of *L*=1. An actual repetition is omitted according to the conditions in Clause 11.1 of [6, TS38.213]. The redundancy version to be applied on the *n*th actual repetition (with the counting including the actual repetitions that are omitted) is determined according to table 6.1.2.1-2.

For uplink cancellation indication from 3GPP TS 38.213 V16.1.0 (2020-03), 11.2A cancellation indication, if a UE is provided *UplinkCancellation,* the UE is provided a CI-RNTI by *ci-RNTI* for monitoring PDCCH candidates for a DCI format 2_4 [5, TS 38.212]. *UplinkCancellation* additionally provides to the UE a set of serving cells, by *ci-ConfigurationPerServingCell,* that includes a set of serving cell indexes and a corresponding set of locations for fields in DCI format 2_4 by *positionInDCI*; a number of fields in DCI format 2_4, by *positionInDCI-forSUL,* for each serving cell for a SUL carrier, if the serving cell is configured with a SUL carrier; for SUL of a serving cell if the serving cell configured with SUL an information payload size for DCI format 2_4 by *dci-PayloadSize-forCI,* and an indication for time-frequency resources by *timeFrequencyRegion.*

For a serving cell having an associated field in DCI format 2_4, for the field denote by $N_{CI}$ a number of bits provided by *CI-PayloadSize,* $B_{CI}$ a number of PRBs provided by *frequencyRegionforCI* in *timeFrequencyRegion,* $T_{CI}$ a number of symbols, excluding symbols for reception of SS/PBCH blocks and DL symbols indicated by *tdd-UL-DL-ConfigurationCommon,* provided by *timeDurationforCI* in *timeFrequencyRegion,* $G_{CI}$ a number of partitions for the $T_{CI}$ symbols provided by *timeGranularityforCI* in *timeFrequencyRegion.*

$G_{CI}$ sets of bits from the $N_{CI}$ bits have a one-to-one mapping with $G_{CI}$ groups of symbols where each of the first $G_{CI} - T_{CI} + \lfloor T_{CI}/G_{CI} \rfloor \cdot G_{CI}$ groups includes $\lfloor T_{CI}/G_{CI} \rfloor$ symbols and each of the remaining $T_{CI} - \lfloor T_{CI}/G_{CI} \rfloor \cdot G_{CI}$ groups includes $\lceil T_{CI}/G_{CI} \rceil$ symbols. A UE determines a symbol duration with respect to a SCS configuration of an active DL BWP where the UE monitors PDCCH for DCI format 2_4 detection.

For a group of symbols, $N_{BI} = N_{CI}/G_{CI}$ bits from each set of bits have a one-to-one mapping with $N_{BI}$ groups of PRBs where each of the first $N_{BI} - B_{CI} + \lfloor B_{CI}/N_{BI} \rfloor \cdot N_{BI}$ groups includes $\lfloor B_{CI}/N_{BI} \rfloor$ PRBs and each of the remaining $B_{CI} - \lfloor B_{CI}/N_{BI} \rfloor \cdot N_{BI}$ groups includes $\lceil B_{CI}/N_{BI} \rceil$ PRBs. A UE determines a first PRB index as $N_{RFR}^{start} = O_{\mathrm{carrier}} + RB_{start}$ and a number of contiguous RBs as $N_{RFR}^{size} = L_{\mathrm{RB}}$ from *frequencyRegionforCI* that indicates an offset $RB_{start}$ and a length $L_{RB}$ as RIV according to [6, TS 38.214], and from *offsetToCarrier* in *FrequencyInfoUL-SIB* that indicates $O_{\mathrm{carrier}}$ for a SCS configuration of an active DL BWP where the UE monitors PDCCH for DCI format 2_4 detection.

An indication by a DCI format 2_4 for a serving cell is applicable to a PUSCH transmission or an SRS transmission on the serving cell. For the serving cell, the UE determines the first symbol of the $T_{CI}$ symbols to be the first symbol that is after $T_{proc,2}$ + *d* from the end of a PDCCH reception where the UE detects the DCI format 2_4, where *d* is provided by *XXX* (where *"XXX"* was yet to be defined in the technical specification). $T_{proc,2}$ corresponds to the PUSCH processing capability 2 [6, TS 38.214] assuming $d_{2,1}$ = 0 with $\mu$ being the smallest SCS configuration between the SCS configurations of the PDCCH and of a PUSCH transmission or of an SRS transmission on the serving cell. The UE does not expect to cancel the PUSCH transmission or the SRS transmission before a corresponding symbol that is $T_{proc,2}$ after a last symbol of a CORESET where the UE detects the DCI format 2_4.

A UE that detects a DCI format 2_4 for a serving cell cancels a PUSCH transmission, or a repetition of a PUSCH transmission [6, TS 38.214] if the PUSCH transmission is with repetitions, or an SRS transmission on the serving cell if, respectively, a group of symbols, from the $T_{CI}$ symbols, has a corresponding bit value of '1' in the DCI format 2_4 and includes a symbol of the (repetition of the) PUSCH transmission or of the SRS transmission, and a group of PRBs, from the $B_{CI}$ PRBs, has a corresponding bit value of '1' in the DCI format 2_4 and includes a PRB of the (repetition of the) PUSCH transmission or of the SRS transmission, where the cancellation of the (repetition of the) PUSCH transmission includes all symbols from the earliest symbol of the (repetition of the) PUSCH transmission that are in one or more groups of symbols having corresponding bit values of '1' in the DCI format 2_4; the cancellation of the SRS transmission includes only symbols that are in one or more groups of symbols having corresponding bit values of '1' in the DCI format 2_4.

At least some embodiments can provide enhanced UL cancellation indication. According to a possible embodiment, a PUSCH transmission can be scheduled dynamically via DCI or be semi-statically configured via RRC signaling.

In one implementation, if a UE receives an uplink cancellation indication (e.g., detecting a DCI format 2_4) for a time and frequency region that fully or partially overlaps with a scheduled PUSCH transmission, the UE cancels the scheduled PUSCH transmission irrespective of priorities of the scheduled PUSCH.

In another implementation, if a UE receives an uplink cancellation indication (e.g., detecting a DCI format 2_4) for a time and frequency region that fully or partially overlaps with a scheduled PUSCH transmission and the UE determines that the scheduled PUSCH is indicated as a low priority channel, the UE cancels the scheduled PUSCH transmission. If the scheduled PUSCH is indicated as a high priority channel, the UE does not cancel the scheduled PUSCH transmission.

In one embodiment, a UE has multiplexed UCI (e.g., HARQ-ACK information, CSI) in a scheduled PUSCH and receives an uplink cancellation indication for a time and frequency region that fully or partially overlaps with the scheduled PUSCH, the UE transmits at least symbols of the scheduled PUSCH where channel bits of the UCI are mapped. In one implementation, the UE transmits the entire PUSCH, if the PUSCH includes HARQ-ACK information and/or high-priority CSI reports (e.g., the high priority CSI reporting can be configured for the UE or dynamically indicated to the UE). In another implementation, the UE transmits symbols of the PUSCH carrying UCI (e.g., HARQ-ACK information and/or high-priority CSI reports). In alternative implementation, the UE may transmit symbols of the PUSCH not overlapping with the indicated time and frequency region of cancellation in addition to symbols of the PUSCH carrying the UCI.

In another embodiment, a UE receives an indication by a network entity that indicates to potentially cancel a scheduled PUSCH based on an uplink cancellation indication, or that indicates not to take into account the uplink cancellation indication for transmission of the scheduled PUSCH. In one implementation, the UE may receive the indication as a part of configured grant-PUSCH configuration information. In another implementation, the UE may receive the indication in DCI scheduling a PUSCH. In an alternative implementation, the UE receives the indication in a group-common DCI of cancellation indication (e.g. an enhanced version of DCI format 2_4), where a bit field in the group-common DCI indicates a selection from options, for example, the bit field '00': any PUSCH or SRS overlapping with an indicated cancellation region (i.e. a time and frequency resource) is cancelled, '01': any PUSCH or SRS overlapping with the indicated cancellation region and not being indicated as a high priority PUSCH or SRS is cancelled, '10': any PUSCH or SRS overlapping with the indicated cancellation region and not carrying UCI is cancelled, and '11': reserved. An example implementation of enhanced UL cancellation indication, DCI format 2_4x, can be:

7.3.1.3.5.x Format 2_4x
DCI format 2_4x is used for notifying the PRB(s) and OFDM symbol(s) where UE may cancel the corresponding UL transmission from the UE and for notifying applicability information of an UL cancellation indication.
The following information is transmitted by means of the DCI format 2_4 with CRC scrambled by CI-RNTI:

- Cancellation indication 1, Applicability indication 1, Cancellation indication 2, Applicability indication 2, ..., Cancellation indication *N*, Applicability indication *N*.

The size of DCI format 2_4x is configurable by higher layers parameter *dci-PayloadSize-forCI* up to 126 bits, according to Clause 11.2A of TS 38.213. The number of bits for each cancellation indication is configurable by higher layer parameter *CI-PayloadSize* and the number of bits for applicability indication (including zero number of bits) is configurable by higher layer parameter *AI-PayloadSize*. For a UE, there is at most one cancellation indication for an UL carrier.

At least some embodiments can provide UCI multiplexing in PUSCH repetition. If one or more PUCCHs and one or more PUSCHs overlap in time, a UE may determine whether timeline conditions for multiplexing one or more types of UCI (e.g. HARQ-ACK information, CSI) and/or UL-SCH in one uplink channel (i.e. PUCCH or PUSCH) are satisfied.
In one implementation, timeline conditions for determination are according to Sub-clause 9.2.5 of TS 38.213 V16.1.0. That is, the first symbol $S_0$ of the earliest PUCCH or PUSCH among a group overlapping PUCCHs and PUSCHs corresponds to the first symbol of the first transmission occasion (for repetition type A)/actual repetition (for repetition type B) of the earliest PUCCH or PUSCH. A UE does not expect a PUCCH or a PUSCH that is in response to a DCI format detection to overlap with any other PUCCH or PUSCH that does not satisfy the timing conditions.
In another implementation, timeline conditions for determination are according to enhanced multiplexing timeline conditions. That is, the first symbol $S_0$ of the earliest PUCCH or PUSCH among a group overlapping PUCCHs and PUSCHs corresponds to the first symbol of the earliest PUCCH or PUSCH transmission occasion (for repetition type A)/actual repetition (for repetition type B) among a group overlapping PUCCH transmission occasion(s)/actual repetition(s) and PUSCH transmission occasion(s)/actual repetition(s). A UE does not expect a PUCCH or PUSCH transmission occasion (type A)/actual repetition (type B) that is in response to a DCI format detection to overlap with any other PUCCH or PUSCH transmission occasion (type A)/actual repetition (type B) that does not satisfy the enhanced timing conditions.
An example implementation of the enhanced multiplexing timeline conditions can be:
If a UE would transmit multiple overlapping PUCCHs in a slot or overlapping PUCCH(s) and PUSCH transmission occasion(s) (repetition type A)/actual repetition(s) (repetition type B) in a slot and, when applicable as described in Clauses 9.2.5.1 and 9.2.5.2, the UE is configured to multiplex different UCI types in one PUCCH, and at least one of the multiple overlapping PUCCHs or PUSCHs is in response to a DCI format detection by the UE, then the UE multiplexes all corresponding UCI types if the following conditions are met. If one of the PUCCH transmissions or PUSCH transmissions is in response to a DCI format detection by the UE, the UE expects that the first symbol $S_0$ of the earliest PUCCH or PUSCH transmission occasion (repetition type A)/actual repetition (repetition type B), among a group overlapping PUCCHs and PUSCH transmission occasion(s) (repetition type A)/actual repetition(s) (repetition type B) in the slot, satisfies the following timeline conditions

- $S_0$ is not before a symbol with CP starting after $T_{proc,1}^{mux}$ after a last symbol of any corresponding PDSCH, $T_{proc,1}^{mux}$ is given by maximum of $\left\{ T_{proc,1}^{mux,1}, \cdots, T_{proc,1}^{mux,i}, \cdots \right\}$ where for the i-th PDSCH with corresponding HARQ-ACK transmission on a PUCCH which is in the group of overlapping PUCCHs and PUSCH transmission occasion(s) (repetition type A)/actual repetition(s) (repetition type B),

$$T_{proc,1}^{mux,i} = \left( N_1 + d_{1,1} + 1 \right) \cdot (2048 + 144) \cdot \kappa \cdot 2^{-\mu} \cdot T_C, \ d_{1,1}$$ is selected for the i-th PDSCH following [6, TS 38.214], $N_1$ is selected based on the UE PDSCH processing capability of the i-th PDSCH and SCS configuration $\mu$, where $\mu$ corresponds to the smallest SCS configuration among the SCS configurations used for the PDCCH scheduling the i-th PDSCH (if any), the i-th PDSCH, the PUCCH with corresponding HARQ-ACK transmission for i-th PDSCH, and all PUSCHs in the group of overlapping PUCCHs and PUSCH transmission occasion(s) (repetition type A)/actual repetition(s) (repetition type B).

- $S_0$ is not before a symbol with CP starting after $T^{mux}_{proc,release}$ after a last symbol of any corresponding SPS PDSCH release or of a DCI format 1_1 indicating SCell dormancy as described in Clause 10.3. $T^{mux}_{proc,release}$ is given by maximum of $\{T^{mux,1}_{proc,release}, \cdots, T^{mux,i}_{proc,release}, \cdots\}$ where for the i-th PDCCH providing the SPS PDSCH release or the DCI format 1_1 with corresponding HARQ-ACK transmission on a PUCCH which is in the group of overlapping PUCCHs and PUSCH transmission occasion(s) (repetition type A)/actual repetition(s) (repetition type B),

$$T^{mux,i}_{proc,release} = (N + 1) \cdot (2048 + 144) \cdot \kappa \cdot 2^{-\mu} \cdot T_C$$ , N is described in Clause 10.2 and is selected based on the UE PDSCH processing capability of the i-th SPS PDSCH release or the DCI format 1_1 and SCS configuration $\mu$, where $\mu$ corresponds to the smallest SCS configuration among the SCS configurations used for the PDCCH providing the i-th SPS PDSCH release, the PUCCH with corresponding HARQ-ACK transmission for i-th SPS PDSCH release or the DCI format 1_1, and all PUSCHs in the group of overlapping PUCCHs and PUSCH transmission occasion(s) (repetition type A)/actual repetition(s) (repetition type B).

- if there is no aperiodic CSI report multiplexed in a PUSCH transmission occasion (repetition type A)/actual repetition (repetition type B) in the group of overlapping PUCCHs and PUSCH transmission occasion(s) (repetition type A)/actual repetition(s) (repetition type B), $S_0$ is not before a symbol with CP starting after $T^{mux}_{proc,2}$ after a last symbol of

  - any PDCCH with the DCI format scheduling an overlapping PUSCH transmission occasion (repetition type A)/actual repetition (repetition type B), and

  - any PDCCH scheduling a PDSCH or SPS PDSCH release with corresponding HARQ-ACK information in an overlapping PUCCH in the slot

    If there is at least one PUSCH in the group of overlapping PUCCHs and PUSCHs, $T^{mux}_{proc,2}$ is given by maximum of $\{T^{mux,1}_{proc,2}, \cdots, T^{mux,i}_{proc,2}, \cdots\}$ where for the i-th PUSCH which is in the group of overlapping PUCCHs and PUSCHs,

    $$T^{mux,i}_{proc,2} = max\left((N_2 + d_{2,1} + 1) \cdot (2048 + 144) \cdot \kappa \cdot 2^{-\mu} \cdot T_C, d_{2,2}\right)$$ , $d_{2,1}$ and $d_{2,2}$ are selected for the i-th PUSCH following [6, TS 38.214], $N_2$ is selected based on the UE PUSCH processing capability of the i-th PUSCH and SCS configuration $\mu$, where $\mu$ corresponds to the smallest SCS configuration among the SCS configurations used for the PDCCH scheduling the i-th PUSCH (if any), the PDCCHs scheduling the PDSCHs with corresponding HARQ-ACK transmission on a PUCCH which is in the group of overlapping PUCCHs/PUSCHs, and all PUSCHs in the group of overlapping PUCCHs and PUSCHs.

    If there is no PUSCH in the group of overlapping PUCCHs and PUSCHs, $T^{mux}_{proc,2}$ is given by maximum of $\{T^{mux,1}_{proc,2}, \cdots, T^{mux,i}_{proc,2}, \cdots\}$ where for the i-th PDSCH with corresponding HARQ-ACK transmission on a PUCCH which is in the group of overlapping PUCCHs,

    $$T^{mux,i}_{proc,2} = (N_2 + 1) \cdot (2048 + 144) \cdot \kappa \cdot 2^{-\mu} \cdot T_C$$ , $N_2$ is selected based on the UE PUSCH processing capability of the PUCCH serving cell if configured. $N_2$ is selected based on the UE PUSCH processing capability 1, if PUSCH processing capability is not configured for the PUCCH serving cell. $\mu$ is selected based on the smallest SCS configuration between the SCS configuration used for the PDCCH scheduling the i-th PDSCH (if any) with corresponding HARQ-ACK transmission on a PUCCH which is in the group of overlapping PUCCHs, and the SCS configuration for the PUCCH serving cell.

- if there is an aperiodic CSI report multiplexed in a PUSCH transmission occasion (repetition type A)/actual repetition (repetition type B) in the group of overlapping PUCCHs and PUSCH transmission occasion(s) (repetition type A)/actual repetition(s) (repetition type B), $S_0$ is not before a symbol with CP starting after

$$T_{\text{proc,CSI}}^{\text{mux}} = \max\left((Z+d)\cdot(2048+144)\cdot\kappa\cdot 2^{-\mu}\cdot T_C, d_{2,2}\right)$$ after a last symbol of

- any PDCCH with the DCI format scheduling an overlapping PUSCH transmission occasion (repetition type A)/actual repetition (repetition type B), and

- any PDCCH scheduling a PDSCH, or SPS PDSCH release, or providing a DCI format 1_1 indicating SCell dormancy with corresponding HARQ-ACK information in an overlapping PUCCH in the slot

where $\mu$ corresponds to the smallest SCS configuration among the SCS configuration of the PDCCHs, the smallest SCS configuration for the group of the overlapping PUSCHs, and the smallest SCS configuration of CSI-RS associated with the DCI format scheduling the PUSCH transmission occasion (repetition type A)/actual repetition (repetition type B) with the multiplexed aperiodic CSI report, and $d = 2$ for $\mu = 0.1$, $d = 3$ for $\mu = 2$ and $d = 4$ for $\mu = 3$

- $N_1$, $N_2$, $d_{1,1}$, $d_{2,1}$, $d_{2,2}$, and $Z$ are defined in [6, TS 38.214], and $\kappa$ and $T_C$ are defined in [4, TS 38.211].

If a UE would transmit multiple overlapping PUCCHs in a slot or overlapping PUCCH(s) and PUSCH transmission occasion(s) (repetition type A)/actual repetition(s) (repetition type B) in a slot, one of the PUCCHs includes HARQ-ACK information in response to an SPS PDSCH reception, and any PUSCH is not in response to a DCI format detection, then the UE expects that the first symbol $S_0$ of the earliest PUCCH or PUSCH transmission occasion (repetition type A)/actual repetition (repetition type B) satisfies the first of the previous timeline conditions with the exception that components associated to a SCS configuration for a PDCCH scheduling a PDSCH or a PUSCH are absent from the timeline conditions.

A UE does not expect a PUCCH or a PUSCH transmission occasion(type A)/actual repetition (type B) that is in response to a DCI format detection to overlap with any other PUCCH or PUSCH transmission occasion (type A)/actual repetition (type B) that does not satisfy the above timing conditions.

In one embodiment, if a UE determines whether all of applicable at least one timeline condition for multiplexing at least one type of UCI (e.g. HARQ-ACK information, CSI, CG-UCI) in a PUSCH is satisfied, the UE multiplexes the at least one type of UCI in at least one PUSCH transmission occasion (for repetition type A)/actual repetition (for repetition type B), where each transmission occasion/actual repetition of the at least one PUSCH transmission occasion/actual repetition has the available number of REs larger than the required number of REs for UCI multiplexing. That is, the UE does not multiplex UCI on a PUSCH transmission occasion/actual repetition that has less number of REs than the required number of REs for UCI multiplexing.

In another embodiment, if a UE determines whether all of applicable at least one timeline condition for multiplexing at least one type of UCI (e.g. HARQ-ACK information, CSI, CG-UCI) in a PUSCH is satisfied, the UE multiplexes the at least one type of UCI in at least one PUSCH transmission occasion (for repetition type A)/actual repetition (for repetition type B), where each transmission occasion/actual repetition of the at least one PUSCH transmission occasion/actual repetition has a number of symbols no less than a threshold value, where the threshold value is determined based on a number of symbols in a nominal repetition. In one implementation, the threshold value is configured or predefined for a given number of symbols in a nominal repetition. In another implementation, a ratio of the threshold value to the number of symbols in a nominal repetition is configured or predefined.

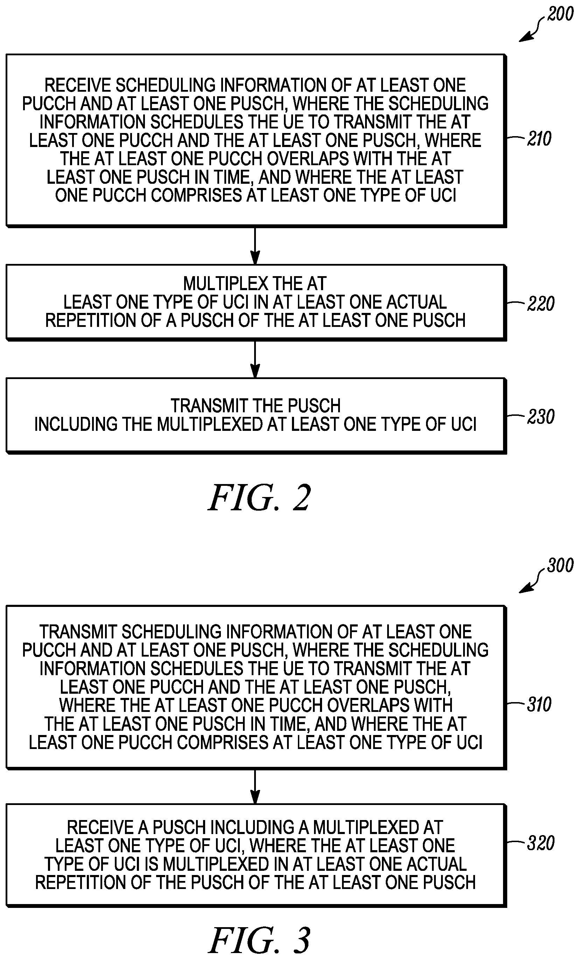

FIG. 2 is an example flowchart 200 illustrating the operation of a wireless communication device, such as the UE 110, according to a possible embodiment. At 210, scheduling information of at least one PUCCH and at least one PUSCH can be received. The scheduling information can schedule the UE to transmit the at least one PUCCH and the at least one PUSCH. The at least one PUCCH can overlap with the at least one PUSCH in time. The at least one PUCCH can include at least one type of UCI.

At 220, the at least one type of UCI can be multiplexed in at least one actual repetition of a PUSCH of the at least one PUSCH. The at least one actual repetition of the PUSCH can have a number of symbols no less than a predefined number of symbols. The predefined number of symbols can be a value of one or a larger value than one. At 230, the PUSCH including the multiplexed at least one type of UCI can be transmitted. The PUSCH can overlap with a PUCCH of the at least one PUCCH.

According to a possible embodiment, the transmitted PUSCH can include at least the at least one actual repetition of the PUSCH. For example, the at least one actual repetition of the PUSCH can be multiplexed with the UCI and the transmitted PUSCH can include additional actual repetitions of the PUSCH that are not multiplexed with the UCI. According to a possible implementation, the at least one actual repetition of the PUSCH can include a first actual repetition and a second actual repetition of the PUSCH can be transmitted without multiplexing the at least one type of UCI in the second actual repetition.

In the claimed invention, the at least one PUCCH includes multiple overlapping PUCCHs, such as PUCCHs that overlap with each other. The PUCCH for multiplexing UCI of the multiple overlapping PUCCHs can be determined. The UCI of the multiple overlapping PUCCHs can include the at least one type of UCI. For example, when a UE would transmit multiple overlapping PUCCHs, the UE can determine a PUCCH to transmit, where UCI of the multiple overlapping PUCCHs can be multiplexed in the PUCCH. If PUCCHs overlap with each other, the UE can first determine a PUCCH for multiplexing UCI of the multiple overlapping PUCCHs, and then if the determined PUCCH overlaps with a PUSCH, the UE can multiplex at least a part of the UCI of the PUCCH into the PUSCH. A UE does not expect a PUCCH resource that results from multiplexing overlapped PUCCH resources, if applicable, to overlap with more than one PUSCHs if each of the more than one PUSCHs includes aperiodic CSI reports.

According to a possible embodiment, a determination can be made as to which PUSCH of the at least one PUSCH to transmit with multiplexing the at least one type of UCI. A determination can be made as to which at least one actual repetition of the determined PUSCH to use for UCI multiplexing. Transmitting the PUSCH can include comprises transmitting the determined PUSCH including the determined at least one actual repetition. The scheduling information does not have to be received in a single scheduling information reception instance. For example, the scheduling information of the PUCCH and the PUSCH can be received in different DCI, different higher layer communications, or received otherwise. The scheduling information of different PUCCH or different PUSCH can also be received in different DCI, different higher layer communications, etc. The at least one PUCCH can at least partially overlap or fully overlap with the at least one PUSCH in time.

According to a possible embodiment, the PUSCH can be an earliest PUSCH among the at least one PUSCH. For example, if a UE transmits multiple PUSCHs in a slot on respective serving cells and the UE would multiplex UCI in one of the multiple PUSCHs and the UE does not multiplex aperiodic CSI in any of the multiple PUSCHs, the UE can multiplex the UCI in a PUSCH of the serving cell with the smallest *ServCellIndex* subject to the conditions in Clause 9.2.5 for UCI multiplexing being fulfilled. If the UE transmits more than one PUSCHs in the slot on the serving cell with the smallest *ServCellIndex* that fulfil the conditions in Clause 9.2.5 for UCI multiplexing, the UE can multiplex the UCI in the earliest PUSCH that the UE transmits in the slot.

According to a possible embodiment, the at least one actual repetition of the PUSCH can include an earliest actual PUSCH repetition overlapping with the PUCCH.

According to a possible embodiment, a number of resource elements required for transmission of the at least one type of UCI can be determined based on a number of symbols for a nominal repetition of the PUSCH. A nominal repetition can include multiple actual repetitions if the nominal repetition crosses a slot boundary or unavailable symbols. For example, an actual repetition is different from a nominal repetition in that a nominal repetition can be broken into multiple actual repetitions if it crosses or includes a slot boundary or unavailable symbols.

According to a possible embodiment, a number of resource elements required for transmission of the at least one type of UCI can be determined based on a number of symbols for an actual repetition of the PUSCH. The UE is not expected to multiplex UCI on a PUSCH transmission occasion/actual repetition that has a smaller number of REs than the required number of REs for UCI multiplexing.

According to a possible embodiment, a determination can be made as to whether one or more timing conditions required for multiplexing the at least one type of UCI in at least one actual repetition of a PUSCH of the at least one PUSCH are satisfied. Multiplexing can include multiplexing the at least one type of UCI in the at least one actual repetition of the PUSCH in response to determining the one or more timing conditions are satisfied. According to a possible implementation, the one or more timing conditions can be based on a location of an earliest symbol of an earliest PUSCH or PUCCH of the at least one PUSCH and the at least one PUCCH. For example, the earliest symbol can the first symbol $S_0$ described above. The timing condition can be a location of an earliest symbol, such as $S_0$, not being before a particular symbol.

FIG. 3 is an example flowchart 300 illustrating the operation of a wireless communication device, such as the network entity 120, according to a possible embodiment. At 310, transmitting scheduling information of at least one PUCCH and at least one PUSCH can be transmitted. The scheduling information can schedule a UE to transmit the at least one PUCCH and the at least one PUSCH. The at least one PUCCH can overlap with the at least one PUSCH in time. The at least one PUCCH can include at least one type of UCI.

At 320, a PUSCH including a multiplexed at least one type of UCI can be received. The at least one type of UCI can be multiplexed in at least one actual repetition of the PUSCH of the at least one PUSCH. The PUSCH can overlap with a PUCCH of the at least one PUCCH. The at least one actual repetition of the PUSCH can have a number of symbols no less than a predefined number of symbols. Other reciprocal operations of the flowchart 200 can also be performed.

It should be understood that, notwithstanding the particular steps as shown in the figures, a variety of additional or different steps can be performed depending upon the embodiment, and one or more of the particular steps can be rearranged, repeated or eliminated entirely depending upon the embodiment. Also, some of the steps performed can be repeated on an ongoing or continuous basis simultaneously while other steps are performed. Furthermore, different steps can be performed by different elements or in a single element of the disclosed embodiments. Additionally, a network entity, such as a base station, transmission and reception point, mobility management entity, or other network entity, can perform reciprocal operations of a UE. For example, the network entity can transmit signals received by the UE and can receive signals transmitted by the UE. The network entity can also process and operate on sent and received signals.

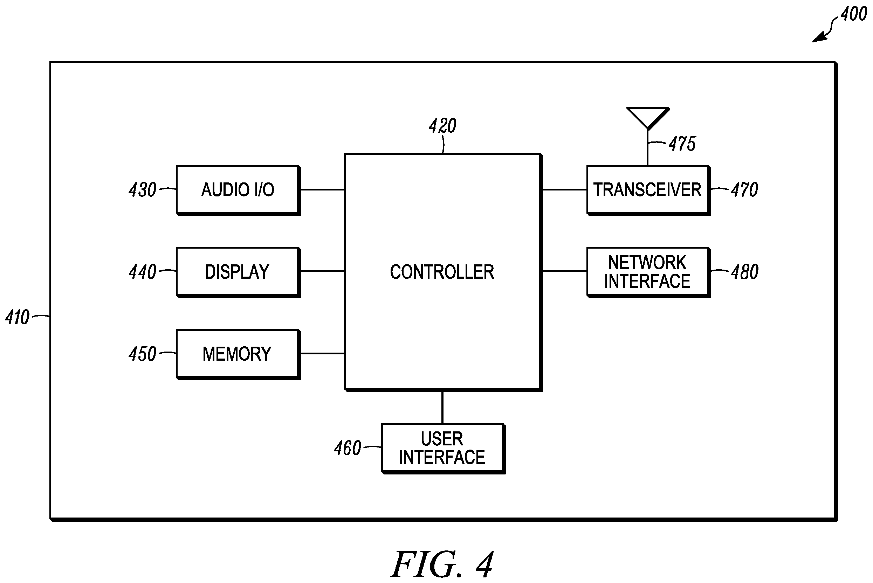

FIG. 4 is an example block diagram of an apparatus 400, such as the UE 110, the network entity 120, or any other wireless communication device disclosed herein, according to a possible embodiment. The apparatus 400 can include a housing 410, a controller 420 coupled to the housing 410, audio input and output circuitry 430 coupled to the controller 420, a display 440 coupled to the controller 420, a memory 450 coupled to the controller 420, a user interface 460 coupled to the controller 420, a transceiver 470 coupled to the controller 420, at least one antenna port 475, such as at least one antenna, coupled to the transceiver 470, and a network interface 480 coupled to the controller 420. The apparatus 400 may not necessarily include all of the illustrated elements for different embodiments of the present disclosure. The apparatus 400 can perform the methods described in all the embodiments.

The display 440 can be a viewfinder, an LCD, an LED display, an OLED display, a plasma display, a projection display, a touch screen, or any other device that displays information. The transceiver 470 can be one or more transceivers that can include a transmitter and/or a receiver. The audio input and output circuitry 430 can include a microphone, a speaker, a transducer, or any other audio input and output circuitry. The user interface 460 can include a keypad, a keyboard, buttons, a touch pad, a joystick, a touch screen display, another additional display, or any other device useful for providing an interface between a user and an electronic device. The network interface 480 can be a USB port, an Ethernet port, an infrared transmitter/receiver, an IEEE 1394 port, a wireless transceiver, a WLAN transceiver, or any other interface that can connect an apparatus to a network, device, and/or computer and that can transmit and receive data communication signals. The memory 450 can include a RAM, a ROM, an EPROM, an optical memory, a solid-state memory, a flash memory, a removable memory, a hard drive, a cache, or any other memory that can be coupled to an apparatus.

The apparatus 400 or the controller 420 may implement any operating system, such as Microsoft Windows®, UNIX®, LINUX®, Android™, or any other operating system. Apparatus operation software may be written in any programming language, such as C, C++, Java, or Visual Basic, for example. Apparatus software may also run on an application framework, such as, for example, a Java® framework, a .NET® framework, or any other application framework. The software and/or the operating system may be stored in the memory 450, elsewhere on the apparatus 400, in cloud storage, and/or anywhere else that can store software and/or an operating system. For example, coding for operations can be implemented as firmware programmed into ROM. The apparatus 400 or the controller 420 may also use hardware to implement disclosed operations. For example, the controller 420 may be any programmable processor. Furthermore, the controller 420 may perform some or all of the disclosed operations. For example, at least some operations can be performed using cloud computing and the controller 420 may perform other operations. At least some operations can also be performed computer executable instructions executed by at least one computer processor. Disclosed embodiments may also be implemented on a general-purpose or a special purpose computer, a programmed microprocessor or microprocessor, peripheral integrated circuit elements, an application-specific integrated circuit or other integrated circuits, hardware/electronic logic circuits, such as a discrete element circuit, a programmable logic device, such as a programmable logic array, field programmable gate-array, or the like. In general, the controller 420 may be any controller or processor device or devices capable of operating an apparatus and implementing the disclosed embodiments. Some or all of the additional elements of the apparatus 400 can also perform some or all of the operations of the disclosed embodiments.

In operation, the apparatus 400 can perform the methods and operations of the disclosed embodiments. The transceiver 470 can transmit and receive signals, including data signals and control signals that can include respective data and control information. The controller 420 can generate and process the transmitted and received signals and information.

According to a possible embodiment, a transceiver 470 can receive scheduling information of at least one PUCCH and at least one PUSCH. The scheduling information can schedule the UE to transmit the at least one PUCCH and the at least one PUSCH. The at least one PUCCH can overlap with the at least one PUSCH in time. The at least one PUCCH can include at least one type of UCI. The controller 420 can multiplex the at least one type of UCI in at least one actual repetition of a PUSCH of the at least one PUSCH. The PUSCH can overlap with a PUCCH of the at least one PUCCH. The at least one actual repetition of the PUSCH can have a number of symbols no less than a predefined number of symbols. The transceiver 470 can transmit the PUSCH including the multiplexed at least one type of UCI.

According to a possible implementation, the transmitted PUSCH can include at least the at least one actual repetition of the PUSCH. The at least one actual repetition of the PUSCH can include a first actual repetition. The transceiver 470 can transmit a second actual repetition of the PUSCH without multiplexing the at least one type of UCI in the second actual repetition.

In the claimed invention, the at least one PUCCH includes multiple overlapping PUCCHs. The controller 420 can determine the PUCCH for multiplexing UCI of the multiple overlapping PUCCHs. The UCI of the multiple overlapping PUCCHs can include the at least one type of UCI.

According to a possible implementation, the controller 420 can determine which PUSCH of the at least one PUSCH to transmit with multiplexing the at least one type of UCI. The controller 420 can determine which at least one actual repetition of the determined PUSCH to use for UCI multiplexing. The transceiver 470 can transmit the determined PUSCH including the determined at least one actual repetition.

According to a possible implementation, the PUSCH can be an earliest PUSCH among the at least one PUSCH. According to a possible implementation, the at least one actual repetition of the PUSCH can include an earliest actual PUSCH repetition overlapping with the PUCCH.

According to a possible implementation, the controller 420 can determine a number of resource elements required for transmission of the at least one type of UCI based on a number of symbols for a nominal repetition of the PUSCH. According to a possible implementation, the controller 420 can determine a number of resource elements required for transmission of the at least one type of UCI based on a number of symbols for an actual repetition of the PUSCH.

According to a possible embodiment for enhanced UL cancellation indication, if a UE has multiplexed UCI (e.g. HARQ-ACK information, CSI) in a scheduled PUSCH and receives an uplink cancellation indication for a time and frequency region that fully or partially overlaps with the scheduled PUSCH, the UE transmits at least symbols of the scheduled PUSCH where channel bits of the UCI are mapped.

A UE can also receive an indication by a network entity that indicates to potentially cancel a scheduled PUSCH based on an uplink cancellation indication, or that indicates not to take into account the uplink cancellation indication for transmission of the scheduled PUSCH, e.g. applicability indication in a group-common DCI of cancellation indication.

According to a possible embodiment for enhanced UCI multiplexing timing conditions, the first symbol $S_0$ of the earliest PUCCH or PUSCH among a group overlapping PUCCHs and PUSCHs corresponds to the first symbol of the earliest PUCCH or PUSCH transmission occasion (for repetition type A)/actual repetition (for repetition type B) among a group overlapping PUCCH transmission occasion(s)/actual repetition(s) and PUSCH transmission occasion(s)/actual repetition(s).

According to a possible embodiment for PUSCH transmission occasions/actual repetition for UCI multiplexing, a UE multiplexes the at least one type of UCI in at least one PUSCH transmission occasion (for repetition type A)/actual repetition (for repetition type B), where each transmission occasion/actual repetition of the at least one PUSCH transmission occasion/actual repetition has the available number of REs larger than the required number of REs for UCI multiplexing.

Compared to configuring a finer time and frequency granularity for a cancellation indication, including an applicability indication in an enhanced UL cancellation indication DCI format can allow UL cancellation to be applied selectively without significantly increasing the DCI size. Also, in UCI multiplexing in PUSCH repetition type B, a UE can avoid an error case by multiplexing UCI in a PUSCH transmission occasion/actual repetition that has the number of available REs larger than the number of required REs for UCI.

According to a possible embodiment, a method in a UE can include receiving scheduling information of a physical channel, where the UE is scheduled to transmit the physical channel. The method can include multiplexing control information in the physical channel. The method can include receiving a cancellation indication indicating a time and frequency resource for potential cancellation of transmission, where the physical channel at least partially overlaps with the time and frequency resource. The method can include transmitting at least a subset of symbols of the physical channel, where the subset of symbols comprises the control information multiplexed in the physical channel.

According to a possible implementation of the above embodiment, the physical channel is a physical uplink shared channel and the control information is uplink control information.

According to a possible implementation of the above embodiment, the control information comprises HARQ-ACK information.

According to a possible implementation of the above embodiment, the control information comprises high-priority control information. According to a possible example of this implementation, the method can include receiving an indication that the control information comprises high-priority control information.

According to a possible implementation of the above embodiment, the physical channel is indicated as a high-priority physical channel, and transmitting at least a subset of symbols of the physical channel includes transmitting all symbols of the physical channel.

According to a possible implementation of the above embodiment, transmitting at least a subset of symbols of the physical channel can include transmitting only symbols of the physical channel that include the control information.

According to a possible implementation of the above embodiment, the method can include receiving an applicability indication that indicates whether to follow the cancellation indication, in order to determine whether to perform transmission of the physical channel.

According to a possible example of the above implementation, the physical channel is a configured grant-PUSCH, and the applicability indication is included in a configured grant-PUSCH configuration.

According to a possible example of the above implementation, the scheduling information of the physical channel is dynamically received in downlink control information, and the applicability indication is included in the downlink control information.

According to a possible example of the above implementation, the cancellation indication and the applicability indication are received in a group-common PDCCH.

According to a possible example of the above implementation, the applicability indication comprises a selection from at least two of cancelling any PUSCH or SRS that overlaps with the indicated time and frequency resource; cancelling any PUSCH or SRS that overlaps with the indicated time and frequency resource and is not indicated as a high-priority PUSCH or SRS; and cancelling any PUSCH or SRS that overlaps with the indicated time and frequency resource and does not carry the control information.

According to a possible embodiment, a method at a UE can include receiving scheduling information of at least one PUCCH and at least one PUSCH, where the UE is scheduled to transmit the at least one PUCCH and the at least one PUSCH, where the at least one PUCCH at least partially overlaps with the at least one PUSCH in time, and where the at least one PUCCH comprises at least one type of UCI. The method can include determining whether one or more timing conditions required for multiplexing the at least one type of UCI in at least one actual repetition of a first PUSCH of the at least one PUSCH are satisfied. The method can include multiplexing the at least one type of UCI in a first actual repetition of the at least one actual repetition of the first PUSCH in response to the determination that the one or more timing conditions are satisfied. The method can include transmitting the first PUSCH. The at least one actual repetition of the first PUSCH overlaps with a first PUCCH of the at least one PUCCH and includes the earliest actual repetition overlapping with the first PUCCH among the at least one PUSCH, where the first PUCCH is the earliest PUCCH among the at least one PUCCH. The first actual repetition has a number of available resource elements no less than a number of resource elements required for transmission of the at least one type of UCI.

According to a possible implementation of the above embodiment, the method can include determining the number of resource elements required for transmission of the at least one type of UCI based on a number of symbols for a nominal repetition of the first PUSCH.

According to a possible implementation of the above embodiment, the method can include determining the number of resource elements required for transmission of the at least one type of UCI based on a number of symbols for an actual repetition of the first PUSCH.

According to a possible implementation of the above embodiment, the method can include transmitting a second actual repetition of the at least one actual repetition of the first PUSCH without multiplexing the at least one type of UCI, in response to the determination that the one or more timing conditions are satisfied, wherein the second actual repetition has a number of available resource elements less than the number of resource elements required for transmission of the at least one type of UCI.

At least some methods of this disclosure can be implemented on a programmed processor. However, the controllers, flowcharts, and modules may also be implemented on a general purpose or special purpose computer, a programmed microprocessor or microcontroller and peripheral integrated circuit elements, an integrated circuit, a hardware electronic or logic circuit such as a discrete element circuit, a programmable logic device, or the like. In general, any device on which resides a finite state machine capable of implementing the flowcharts shown in the figures may be used to implement the processor functions of this disclosure.

At least some embodiments can improve operation of the disclosed devices. Also, while this disclosure has been described with specific embodiments thereof, it is evident that many alternatives, modifications, and variations will be apparent to those skilled in the art. For example, various components of the embodiments may be interchanged, added, or substituted in the other embodiments. Also, all of the elements of each figure are not necessary for operation of the disclosed embodiments. For example, one of ordinary skill in the art of the disclosed embodiments would be enabled to make and use the teachings of the disclosure by simply employing the elements of the independent claims. Accordingly, embodiments of the disclosure as set forth herein are intended to be illustrative, not limiting.

In this document, relational terms such as "first," "second," and the like may be used solely to distinguish one entity or action from another entity or action without necessarily requiring or implying any actual such relationship or order between such entities or actions. The phrase "at least one of," "at least one selected from the group of," or "at least one selected from" followed by a list is defined to mean one, some, or all, but not necessarily all of, the elements in the list. The terms "comprises," "comprising," "including," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that comprises the element. Also, the term "another" is defined as at least a second or more. The terms "including," "having," and the like, as used herein, are defined as "comprising." Furthermore, the background section is not admitted as prior art, is written as the inventor's own understanding of the context of some embodiments at the time of filing, and includes the inventor's own recognition of any problems with existing technologies and/or problems experienced in the inventor's own work.

List of Abbreviations

| | |
|---|---|
| ACK | Acknowledgement |
| A-CSI | Aperiodic CSI |
| BWP | Bandwidth Part |
| CCCH SDU | Common Control Channel Service Data Unit |
| CCE | Control Channel Element |
| CG-UCI | Configured Grand Uplink Control Information |
| CI-RNTI | Cancellation Indication Radio Network Temporary Identifier |
| CRC | Cyclic Redundancy Check |
| C-RNTI | Cell RNTI |
| CSI | Channel State Information |
| CSI-IM | Channel State Information Interference Measurement |
| CSS | Common Search Space |
| DAI | Downlink Assignment Index |
| DCI | Downlink Control Information |
| DL | Downlink |
| FR1 | Frequency Range 1 |
| FR2 | Frequency Range 2 |
| HARQ-ACK | Hybrid Automatic Repeat Request-Acknowledgement |
| MAC | Medium Access Control |
| MCG | Master Cell Group |
| MCS | Modulation and Coding Scheme |
| MsgA | Message A |
| MsgB | Message B |
| MPO | MsgA PUSCH Occasion |
| NR | New Radio |
| NR-DC | New Radio - Dual Connectivity |
| NUL | Non-supplementary Uplink |
| PCell | Primary Cell |
| PDCCH | Physical Downlink Control Channel |
| PDSCH | Physical Downlink Shared Channel |
| PDU | Protocol Data Unit |
| PRACH | Physical Random Access Channel |
| PUCCH | Physical Uplink Control Channel |
| PUSCH | Physical Uplink Shared Channel |
| FDD | Frequency Division Duplex |
| RE | Resource Element |
| RNTI | Radio Network Temporary Identifier |
| RRM | Radio Resource Management |
| RSRP | Reference Signal Received Power |
| SCell | Secondary Cell |
| SCG | Secondary Cell Group |
| SpCell | Special Cell (i.e. a PCell of a MCG or SCG) |
| SS/PBCH | Synchronization Signal/Physical Broadcast Channel |
| SR | Scheduling Request |
| SP-CSI | Semi-persistent CSI |
| SRS | Sounding Reference Signal |
| SRI | SRS Resource Indicator |
| SUL | Supplementary Uplink |
| TB | Transport block |
| TDD | Time Division Duplex |
| TCI | Transmission Configuration Indicator |

| | |
|---|---|
| TC-RNTI | Temporary Cell RNTI |
| UCI | Uplink Control Information |
| UE | User Equipment |
| UL | Uplink |
| URLLC | Ultra-Reliable Low-Latency Communication |
| USS | UE-specific Search Space |

**Claims**

1. An apparatus (400) comprising:

   a transceiver (470) configured to receive (210) scheduling information of at least one physical uplink control channel and at least one physical uplink shared channel,

   where the scheduling information schedules the apparatus to transmit the at least one physical uplink control channel and the at least one physical uplink shared channel,
   where the at least one physical uplink control channel overlaps with the at least one physical uplink shared channel in time, and
   where the at least one physical uplink control channel comprises at least one type of uplink control information; and

   a controller (420) coupled to the transceiver, where the controller is configured to multiplex (220) the at least one type of uplink control information in at least one actual repetition of a physical uplink shared channel of the at least one physical uplink shared channel,
   wherein the transceiver is configured to transmit (230) the physical uplink shared channel including the multiplexed at least one type of uplink control information,
   wherein the physical uplink shared channel overlaps with a physical uplink control channel of the at least one physical uplink control channel,
   wherein the at least one actual repetition of the physical uplink shared channel has a number of symbols no less than a predefined number of symbols,
   wherein the at least one physical uplink control channel comprises multiple overlapping physical uplink control channels,
   wherein the controller is configured to determine the physical uplink control channel for multiplexing uplink control information of the multiple overlapping physical uplink control channels, and
   wherein the uplink control information of the multiple overlapping physical uplink control channels includes the at least one type of uplink control information.

2. The apparatus according to claim 1, wherein the transmitted physical uplink shared channel comprises at least the at least one actual repetition of the physical uplink shared channel,
   optionally:

   wherein the at least one actual repetition of the physical uplink shared channel comprises a first actual repetition, and
   wherein the transceiver is configured to transmit a second actual repetition of the physical uplink shared channel without multiplexing the at least one type of uplink control information in the second actual repetition.

3. The apparatus according to claim 1,

   wherein the controller

   is configured to determine which physical uplink shared channel of the at least one physical uplink shared channel to transmit with multiplexing the at least one type of uplink control information, and
   to determine which at least one actual repetition of the determined physical uplink shared channel to use for uplink control information multiplexing, and

   wherein the transceiver is configured to transmit the determined physical uplink shared channel including the determined at least one actual repetition.

4. The apparatus according to claim 1, wherein the physical uplink shared channel is an earliest physical uplink shared channel among the at least one physical uplink shared channel.

5. The apparatus according to claim 1, wherein the at least one actual repetition of the physical uplink shared channel includes an earliest actual physical uplink shared channel repetition overlapping with the physical uplink control channel.

6. The apparatus according to claim 1, wherein the controller is configured to determine a number of resource elements required for transmission of the at least one type of uplink control information based on a number of symbols for a nominal repetition of the physical uplink shared channel.

7. The apparatus according to claim 1,

wherein the controller is configured to determine whether one or more timing conditions required for multiplexing the at least one type of uplink control information in at least one actual repetition of a physical uplink shared channel of the at least one physical uplink shared channel are satisfied, and

wherein the controller is configured to multiplex the at least one type of uplink control information in the at least one actual repetition of the physical uplink shared channel in response to determining the one or more timing conditions are satisfied.

8. A method (200) in a user equipment, the method comprising:

receiving (210) scheduling information of at least one physical uplink control channel and at least one physical uplink shared channel,

where the scheduling information schedules the user equipment to transmit the at least one physical uplink control channel and the at least one physical uplink shared channel,

where the at least one physical uplink control channel overlaps with the at least one physical uplink shared channel in time, and

where the at least one physical uplink control channel comprises at least one type of uplink control information;

multiplexing (220) the at least one type of uplink control information in at least one actual repetition of a physical uplink shared channel of the at least one physical uplink shared channel; and

transmitting (230) the physical uplink shared channel including the multiplexed at least one type of uplink control information,

wherein the physical uplink shared channel overlaps with a physical uplink control channel of the at least one physical uplink control channel,

wherein the at least one actual repetition of the physical uplink shared channel has a number of symbols no less than a predefined number of symbols,

wherein the at least one physical uplink control channel comprises multiple overlapping physical uplink control channels,

wherein the method further comprises determining the physical uplink control channel for multiplexing uplink control information of the multiple overlapping physical uplink control channels, and

wherein the uplink control information of the multiple overlapping physical uplink control channels includes the at least one type of uplink control information.

9. The method according to claim 8, wherein the transmitted physical uplink shared channel comprises at least the at least one actual repetition of the physical uplink shared channel,

optionally:

wherein the at least one actual repetition of the physical uplink shared channel comprises a first actual repetition, and

wherein the method further comprises transmitting a second actual repetition of the physical uplink shared channel without multiplexing the at least one type of uplink control information in the second actual repetition.

10. The method according to claim 8, further comprising:

determining which physical uplink shared channel of the at least one physical uplink shared channel to transmit with multiplexing the at least one type of uplink control information; and
determining which at least one actual repetition of the determined physical uplink shared channel to use for uplink control information multiplexing,
wherein transmitting comprises transmitting the determined physical uplink shared channel including the determined at least one actual repetition.

11. The method according to claim 8, wherein the physical uplink shared channel is an earliest physical uplink shared channel among the at least one physical uplink shared channel.

12. The method according to claim 8, wherein the at least one actual repetition of the physical uplink shared channel includes an earliest actual physical uplink shared channel repetition overlapping with the physical uplink control channel.

13. The method according to claim 8, further comprising determining a number of resource elements required for transmission of the at least one type of uplink control information based on a number of symbols for a nominal repetition of the physical uplink shared channel.

14. The method according to claim 8, further comprising determining a number of resource elements required for transmission of the at least one type of uplink control information based on a number of symbols for an actual repetition of the physical uplink shared channel.

15. The method according to claim 8, further comprising determining whether one or more timing conditions required for multiplexing the at least one type of uplink control information in at least one actual repetition of a physical uplink shared channel of the at least one physical uplink shared channel are satisfied,

wherein multiplexing comprises multiplexing the at least one type of uplink control information in the at least one actual repetition of the physical uplink shared channel in response to determining the one or more timing conditions are satisfied,
optionally wherein the one or more timing conditions are based on a location of an earliest symbol of an earliest physical uplink shared channel or physical uplink control channel of the at least one physical uplink shared channel and the at least one physical uplink control channel.


**Patentansprüche**

1. Vorrichtung (400), Folgendes umfassend:

einen Sendeempfänger (470), der dazu konfiguriert ist, (210) Zeitplanungsinformationen von mindestens einem physischen Uplink-Steuerkanal und mindestens einem physischen Uplink-Gemeinschaftskanal zu empfangen, wobei die Zeitplanungsinformationen die Vorrichtung zeitlich dazu einplanen, den mindestens einen physischen Uplink-Steuerkanal und den mindestens einen physischen Uplink-Gemeinschaftskanal zu senden, wobei sich der mindestens eine physische Uplink-Steuerkanal zeitlich mit dem mindestens einen physischen Uplink-Gemeinschaftskanal überschneidet, und
wobei der mindestens eine physische Uplink-Steuerkanal mindestens eine Art von Uplink-Steuerinformationen umfasst; und
eine mit dem Sendeempfänger gekoppelte Steuerung (420), wobei die Steuerung dazu konfiguriert ist, (220) die mindestens eine Art von Uplink-Steuerinformationen in mindestens einer tatsächlichen Wiederholung eines physischen Uplink-Gemeinschaftskanals des mindestens einen physischen Uplink-Gemeinschaftskanals zu multiplexen,
wobei der Sendeempfänger dazu konfiguriert ist, den physischen Uplink-Gemeinschaftskanal einschließlich der multiplexten mindestens einen Art von Uplink-Steuerinformationen zu senden (230),
wobei sich der physische Uplink-Gemeinschaftskanal mit einem physischen Uplink-Steuerkanal des mindestens einen physischen Uplink-Gemeinschaftskanal überschneidet,
wobei die mindestens eine tatsächliche Wiederholung des physischen Uplink-Gemeinschaftskanals eine Anzahl von Symbolen aufweist, die nicht geringer ist als eine vordefinierte Anzahl von Symbolen,
wobei der mindestens eine physische Uplink-Steuerkanal mehrere sich überschneidende physische Uplink-Steuerkanäle umfasst,

wobei die Steuerung dazu konfiguriert ist, den physischen Uplink-Steuerkanal zum Multiplexen von Uplink-Steuerinformationen der mehreren sich überschneidenden physischen Uplink-Steuerkanäle zu bestimmen, und wobei die Uplink-Steuerinformationen der mehreren sich überschneidenden physischen Uplink-Steuerkanäle die mindestens eine Art von Uplink-Steuerinformationen umfassen.

2. Vorrichtung nach Anspruch 1, wobei der gesendete physische Uplink-Gemeinschaftskanal mindestens die mindestens eine tatsächliche Wiederholung des physischen Uplink-Gemeinschaftskanals umfasst,
optional:

wobei die mindestens eine tatsächliche Wiederholung des physischen Uplink-Gemeinschaftskanals eine erste tatsächliche Wiederholung umfasst, und
wobei der Sendeempfänger dazu konfiguriert ist, eine zweite tatsächliche Wiederholung des physischen Uplink-Gemeinschaftskanals zu senden, ohne die mindestens eine Art von Uplink-Steuerinformationen in der zweiten tatsächlichen Wiederholung zu multiplexen.

3. Vorrichtung nach Anspruch 1, wobei die Steuerung

dazu konfiguriert ist, zu bestimmen, welcher physische Uplink-Gemeinschaftskanal des mindestens einen physischen Uplink-Gemeinschaftskanals mit Multiplexen der mindestens einen Art von Uplink-Steuerinformationen zu senden ist, und
zu bestimmen, welche mindestens eine tatsächliche Wiederholung des bestimmten physischen Uplink-Gemeinschaftskanals zum Multiplexen von Uplink-Steuerinformationen zu verwenden ist, und
wobei der Sendeempfänger dazu konfiguriert ist, den bestimmten physischen Uplink-Gemeinschaftskanal einschließlich der bestimmten mindestens einen tatsächlichen Wiederholung zu senden.

4. Vorrichtung nach Anspruch 1, wobei der physische Uplink-Gemeinschaftskanal ein frühester physischer Uplink-Gemeinschaftskanal des mindestens einem physischen Uplink-Gemeinschaftskanals ist.

5. Vorrichtung nach Anspruch 1, wobei die mindestens eine tatsächliche Wiederholung des physischen Uplink-Gemeinschaftskanals eine früheste tatsächliche Wiederholung des physischen Uplink-Gemeinschaftskanals umfasst, die sich mit dem physischen Uplink-Steuerkanal überschneidet.

6. Vorrichtung nach Anspruch 1, wobei die Steuerung dazu konfiguriert ist, eine Anzahl von Ressourcenelementen zu bestimmen, die zur Sendung der mindestens einen Art von Uplink-Steuerinformationen erforderlich ist, basierend auf einer Anzahl von Symbolen für eine nominelle Wiederholung des physischen Uplink-Gemeinschaftskanals.

7. Vorrichtung nach Anspruch 1,

wobei die Steuerung dazu konfiguriert ist, zu bestimmen, ob eine oder mehrere Zeitbedingungen, die zum Multiplexen der mindestens einen Art von Uplink-Steuerinformationen in mindestens einer tatsächlichen Wiederholung eines physischen Uplink-Gemeinschaftskanals des mindestens einen physischen Uplink-Gemeinschaftskanals erforderlich sind, erfüllt sind, und
wobei die Steuerung dazu konfiguriert ist, die mindestens eine Art von Uplink-Steuerinformationen in der mindestens einen tatsächlichen Wiederholung des physischen Uplink-Gemeinschaftskanals zu multiplexen, wenn bestimmt wird, dass die eine oder mehreren Zeitbedingungen erfüllt sind.

8. Verfahren (200) in einem Benutzergerät, wobei das Verfahren Folgendes umfasst:

Empfangen (210) von Zeitplanungsinformationen mindestens eines physischen Uplink-Steuerkanals und mindestens eines physischen Uplink-Gemeinschaftskanals,
wobei die Zeitplanungsinformationen das Benutzergerät zeitlich dazu einplanen, den mindestens einen physischen Uplink-Steuerkanal und den mindestens einen physischen Uplink-Gemeinschaftskanal zu senden,
wobei sich der mindestens eine physische Uplink-Steuerkanal zeitlich mit dem mindestens einen physischen Uplink-Gemeinschaftskanal überschneidet, und
wobei der mindestens eine physische Uplink-Steuerkanal mindestens eine Art von Uplink-Steuerinformationen umfasst;
Multiplexen (220) der mindestens einen Art von Uplink-Steuerinformationen in mindestens einer tatsächlichen Wiederholung eines physischen Uplink-Gemeinschaftskanals des mindestens einen physischen Uplink-Gemeinschaftskanals;
und
Senden (230) des physischen Uplink-Gemeinschaftskanals einschließlich der multiplexten mindestens einen Art von Uplink-Steuerungsinformationen,
wobei sich der Uplink-Gemeinschaftskanal mit einem physischen Uplink-Steuerungskanal des mindestens einen physischen Uplink-Steuerungskanals überschneidet,
wobei die mindestens eine tatsächliche Wiederholung des physischen Uplink-Gemeinschaftskanals eine Anzahl von Symbolen aufweist, die nicht geringer ist als eine vordefinierte Anzahl von Symbolen,
wobei der mindestens eine physische Uplink-Steuerkanal mehrere sich überschneidende physische Uplink-Steuerkanäle umfasst,
wobei das Verfahren ferner Bestimmen des physische Uplink-Steuerkanals zum Multiplexen von Uplink-Steuerinformationen der mehreren sich überschneidenden physischen Uplink-Steuerkanäle umfasst, und
wobei die Uplink-Steuerinformationen der mehreren sich überschneidenden physischen Uplink-Steuerkanäle die mindestens eine Art von Uplink-Steuerinformationen umfassen.

9. Verfahren nach Anspruch 8, wobei der gesendete physische Uplink-Gemeinschaftskanal mindestens die mindestens eine tatsächliche Wiederholung des physischen Uplink-Gemeinschaftskanals umfasst, optional:

   wobei die mindestens eine tatsächliche Wiederholung des physischen Uplink-Gemeinschaftskanals eine erste tatsächliche Wiederholung umfasst, und
   wobei das Verfahren ferner Senden einer zweiten tatsächlichen Wiederholung des physischen Uplink-Gemeinschaftskanals ohne Multiplexen der mindestens einen Art von Uplink-Steuerinformationen in der zweiten tatsächlichen Wiederholung umfasst.

10. Verfahren nach Anspruch 8, ferner umfassend:

    Bestimmen, welcher physische Uplink-Gemeinschaftskanal des mindestens einen physischen Uplink-Gemeinschaftskanals mit Multiplexen der mindestens einen Art von Uplink-Steuerungsinformationen zu senden ist; und
    Bestimmen, welche mindestens eine tatsächliche Wiederholung des bestimmten physischen Uplink-Gemeinschaftskanals zum Multiplexen von Uplink-Steuerungsinformationen zu verwenden ist,
    wobei das Senden Senden des bestimmten physische Uplink-Gemeinschaftskanals einschließlich der bestimmten mindestens einen tatsächlichen Wiederholung umfasst.

11. Verfahren nach Anspruch 8, wobei der physische Uplink-Gemeinschaftskanal ein frühester physische Uplink-Gemeinschaftskanal des mindestens einen physischen Uplink-Gemeinschaftskanals ist.

12. Verfahren nach Anspruch 8, wobei die mindestens eine tatsächliche Wiederholung des physischen Uplink-Gemeinschaftskanals eine früheste tatsächliche Wiederholung des physischen Uplink-Gemeinschaftskanals umfasst, die sich mit dem physischen Uplink-Gemeinschaftskanal überschneidet.

13. Verfahren nach Anspruch 8, ferner umfassend Bestimmen einer Anzahl von Ressourcenelementen, die zur Sendung der mindestens einen Art von Uplink-Steuerinformationen erforderlich ist, basierend auf einer Anzahl von Symbolen für eine nominelle Wiederholung des physischen Uplink-Gemeinschaftskanals.

14. Verfahren nach Anspruch 8, ferner umfassend Bestimmen einer Anzahl von Ressourcenelementen, die zur Sendung der mindestens einen Art von Uplink-Steuerinformationen erforderlich ist, basierend auf einer Anzahl von Symbolen für eine tatsächliche Wiederholung des physischen Uplink-Gemeinschaftskanals.

15. Verfahren nach Anspruch 8, ferner umfassend Bestimmen, ob eine oder mehrere Zeitbedingungen, die zum Multiplexen der mindestens einen Art von Uplink-Steuerinformationen in mindestens einer tatsächlichen Wiederholung eines physischen Uplink-Gemeinschaftskanals des mindestens einen physischen Uplink-Gemeinschaftskanals erforderlich sind, erfüllt sind,

    wobei das Multiplexen Multiplexen der mindestens einen Art von Uplink-Steuerinformationen in der mindestens einen tatsächlichen Wiederholung des physischen Uplink- Gemeinschaftskanals als Reaktion auf das Bestimmen umfasst, dass die eine oder mehreren Zeitbedingungen erfüllt sind,
    wobei optional die eine oder mehreren Zeitbedingungen auf einer Position eines frühesten Symbols eines frühesten physischen Uplink-Gemeinschaftskanals oder physischen Uplink-Steuerkanals des mindestens einen physischen Uplink-Gemeinschaftskanals und des mindestens einen physischen Uplink-Steuerkanals basieren.

**Revendications**

1. Appareil (400), comprenant :

   un émetteur-récepteur (470) configuré pour recevoir (210) des informations de planification d'au moins un canal de contrôle physique de liaison montante et d'au moins un canal partagé physique de liaison montante,

   où les informations de planification planifient la transmission par l'appareil de l'au moins un canal de contrôle physique de liaison montante et de l'au moins un canal partagé physique de liaison montante,
   où l'au moins un canal de contrôle physique de liaison montante chevauche l'au moins un canal partagé physique de liaison montante dans le temps, et
   où l'au moins un canal de contrôle physique de liaison montante comprend au moins un type d'informations de contrôle de liaison montante ; et

   un contrôleur (420) couplé à l'émetteur-récepteur, où le contrôleur est configuré pour multiplexer (220) l'au moins un type d'informations de contrôle de liaison montante dans au moins une répétition réelle d'un canal partagé physique de liaison montante de l'au moins un canal partagé physique de liaison montante,
   dans lequel l'émetteur-récepteur est configuré pour transmettre (230) le canal partagé physique de liaison montante incluant l'au moins un type d'informations de contrôle de liaison montante multiplexé,
   dans lequel le canal partagé physique de liaison montante chevauche un canal de contrôle physique de liaison montante de l'au moins un canal de contrôle physique de liaison montante,
   dans lequel l'au moins une répétition réelle du canal partagé physique de liaison montante a un nombre de symboles qui n'est pas inférieur à un nombre prédéfini de symboles,
   dans lequel l'au moins un canal de contrôle physique de liaison montante comprend plusieurs canaux de contrôle physiques de liaison montante se chevauchant,
   dans lequel le contrôleur est configuré pour déterminer le canal de contrôle physique de liaison montante pour multiplexer des informations de contrôle de liaison montante des plusieurs canaux de contrôle physiques de liaison montante se chevauchant, et
   dans lequel les informations de contrôle de liaison montante des plusieurs canaux de contrôle physiques de liaison montante se chevauchant incluent l'au moins un type d'informations de contrôle de liaison montante.

2. Appareil selon la revendication 1, dans lequel le canal partagé physique de liaison montante transmis comprend au moins l'au moins une répétition réelle du canal partagé physique de liaison montante, facultativement :

   dans lequel l'au moins une répétition réelle du canal partagé physique de liaison montante comprend une première répétition réelle, et
   dans lequel l'émetteur-récepteur est configuré pour transmettre une seconde répétition réelle du canal partagé physique de liaison montante sans multiplexer l'au moins un type d'informations de contrôle de liaison montante dans la seconde répétition réelle.

3. Appareil selon la revendication 1,

   dans lequel le contrôleur

   est configuré pour déterminer quel canal partagé physique de liaison montante de l'au moins un canal partagé physique de liaison montante transmettre avec le multiplexage de l'au moins un type d'informations de contrôle de liaison montante, et
   pour déterminer quelle au moins une répétition réelle du canal partagé physique de liaison montante déterminé utiliser pour le multiplexage d'informations de contrôle de liaison montante, et

   dans lequel l'émetteur-récepteur est configuré pour transmettre le canal partagé physique de liaison montante déterminé incluant l'au moins une répétition réelle déterminée.

4. Appareil selon la revendication 1, dans lequel le canal partagé physique de liaison montante est un canal partagé physique de liaison montante le plus précoce parmi l'au moins un canal partagé physique de liaison montante.

5.  Appareil selon la revendication 1, dans lequel l'au moins une répétition réelle du canal partagé physique de liaison montante inclut une répétition de canal partagé physique de liaison montante réelle la plus précoce chevauchant le canal de contrôle physique de liaison montante.

6.  Appareil selon la revendication 1, dans lequel le contrôleur est configuré pour déterminer un nombre d'éléments de ressource requis pour la transmission de l'au moins un type d'informations de contrôle de liaison montante sur la base d'un nombre de symboles pour une répétition nominale du canal partagé physique de liaison montante.

7.  Appareil selon la revendication 1,

    dans lequel le contrôleur est configuré pour déterminer si une ou plusieurs conditions de synchronisation requises pour multiplexer l'au moins un type d'informations de contrôle de liaison montante dans au moins une répétition réelle d'un canal partagé physique de liaison montante de l'au moins un canal partagé physique de liaison montante sont satisfaites, et
    dans lequel le contrôleur est configuré pour multiplexer l'au moins un type d'informations de contrôle de liaison montante dans l'au moins une répétition réelle du canal partagé physique de liaison montante en réponse à la détermination du fait que les une ou plusieurs conditions de synchronisation sont satisfaites.

8.  Procédé (200) dans un équipement utilisateur, le procédé comprenant :

    la réception (210) d'informations de planification d'au moins un canal de contrôle physique de liaison montante et d'au moins un canal partagé physique de liaison montante,

        où les informations de planification planifient la transmission par l'équipement utilisateur de l'au moins un canal de contrôle physique de liaison montante et de l'au moins un canal partagé physique de liaison montante,
        où l'au moins un canal de contrôle physique de liaison montante chevauche l'au moins un canal partagé physique de liaison montante dans le temps, et
        où l'au moins un canal de contrôle physique de liaison montante comprend au moins un type d'informations de contrôle de liaison montante ;

    le multiplexage (220) de l'au moins un type d'informations de contrôle de liaison montante dans au moins une répétition réelle d'un canal partagé physique de liaison montante de l'au moins un canal partagé physique de liaison montante ; et
    la transmission (230) du canal partagé physique de liaison montante incluant l'au moins un type d'informations de contrôle de liaison montante multiplexé,
    dans lequel le canal partagé physique de liaison montante chevauche un canal de contrôle physique de liaison montante de l'au moins un canal de contrôle physique de liaison montante,
    dans lequel l'au moins une répétition réelle du canal partagé physique de liaison montante a un nombre de symboles qui n'est pas inférieur à un nombre prédéfini de symboles,
    dans lequel l'au moins un canal de contrôle physique de liaison montante comprend plusieurs canaux de contrôle physiques de liaison montante se chevauchant,
    dans lequel le procédé comprend en outre la détermination du canal de contrôle physique de liaison montante pour multiplexer des informations de contrôle de liaison montante des plusieurs canaux de contrôle physiques de liaison montante se chevauchant, et
    dans lequel les informations de contrôle de liaison montante des plusieurs canaux de contrôle physiques de liaison montante se chevauchant incluent l'au moins un type d'informations de contrôle de liaison montante.

9.  Procédé selon la revendication 8, dans lequel le canal partagé physique de liaison montante transmis comprend au moins l'au moins une répétition réelle du canal partagé de liaison montante physique, facultativement :

    dans lequel l'au moins une répétition réelle du canal partagé physique de liaison montante comprend une première répétition réelle, et
    dans lequel le procédé comprend en outre la transmission d'une seconde répétition réelle du canal partagé physique de liaison montante sans multiplexer l'au moins un type d'informations de contrôle de liaison montante dans la seconde répétition réelle.

**10.** Procédé selon la revendication 8, comprenant en outre :

la détermination de quel canal partagé physique de liaison montante de l'au moins un canal partagé physique de liaison montante transmettre avec le multiplexage de l'au moins un type d'informations de contrôle de liaison montante ; et
la détermination de quelle au moins une répétition réelle du canal partagé physique de liaison montante déterminé utiliser pour le multiplexage d'informations de contrôle de liaison montante,
dans lequel la transmission comprend la transmission du canal partagé physique de liaison montante déterminé incluant l'au moins une répétition réelle déterminée.

**11.** Procédé selon la revendication 8, dans lequel le canal partagé physique de liaison montante est un canal partagé physique de liaison montante le plus précoce parmi l'au moins un canal partagé physique de liaison montante.

**12.** Procédé selon la revendication 8, dans lequel l'au moins une répétition réelle du canal partagé physique de liaison montante inclut une répétition de canal partagé physique de liaison montante réelle la plus précoce chevauchant le canal de contrôle physique de liaison montante.

**13.** Procédé selon la revendication 8, comprenant en outre la détermination d'un nombre d'éléments de ressource requis pour la transmission de l'au moins un type d'informations de contrôle de liaison montante sur la base d'un nombre de symboles pour une répétition nominale du canal partagé physique de liaison montante.

**14.** Procédé selon la revendication 8, comprenant en outre la détermination d'un nombre d'éléments de ressource requis pour la transmission de l'au moins un type d'informations de contrôle de liaison montante sur la base d'un nombre de symboles pour une répétition réelle du canal partagé physique de liaison montante.

**15.** Procédé selon la revendication 8, comprenant en outre le fait de déterminer si une ou plusieurs conditions de synchronisation requises pour multiplexer l'au moins un type d'informations de contrôle de liaison montante dans au moins une répétition réelle d'un canal partagé physique de liaison montante de l'au moins un canal partagé physique de liaison montante sont satisfaites,

dans lequel le multiplexage comprend le multiplexage de l'au moins un type d'informations de contrôle de liaison montante dans l'au moins une répétition réelle du canal partagé physique de liaison montante en réponse à la détermination du fait que les une ou plusieurs conditions de synchronisation sont satisfaites,
facultativement dans lequel les une ou plusieurs conditions de synchronisation sont basées sur un emplacement d'un symbole le plus précoce d'un canal partagé physique de liaison montante ou d'un canal de contrôle physique de liaison montante de l'au moins un canal partagé physique de liaison montante et de l'au moins un canal de contrôle physique de liaison montante.

*FIG. 1*

RECEIVE SCHEDULING INFORMATION OF AT LEAST ONE PUCCH AND AT LEAST ONE PUSCH, WHERE THE SCHEDULING INFORMATION SCHEDULES THE UE TO TRANSMIT THE AT LEAST ONE PUCCH AND THE AT LEAST ONE PUSCH, WHERE THE AT LEAST ONE PUCCH OVERLAPS WITH THE AT LEAST ONE PUSCH IN TIME, AND WHERE THE AT LEAST ONE PUCCH COMPRISES AT LEAST ONE TYPE OF UCI — 210

MULTIPLEX THE AT LEAST ONE TYPE OF UCI IN AT LEAST ONE ACTUAL REPETITION OF A PUSCH OF THE AT LEAST ONE PUSCH — 220

TRANSMIT THE PUSCH INCLUDING THE MULTIPLEXED AT LEAST ONE TYPE OF UCI — 230

*FIG. 2*

TRANSMIT SCHEDULING INFORMATION OF AT LEAST ONE PUCCH AND AT LEAST ONE PUSCH, WHERE THE SCHEDULING INFORMATION SCHEDULES THE UE TO TRANSMIT THE AT LEAST ONE PUCCH AND THE AT LEAST ONE PUSCH, WHERE THE AT LEAST ONE PUCCH OVERLAPS WITH THE AT LEAST ONE PUSCH IN TIME, AND WHERE THE AT LEAST ONE PUCCH COMPRISES AT LEAST ONE TYPE OF UCI — 310

RECEIVE A PUSCH INCLUDING A MULTIPLEXED AT LEAST ONE TYPE OF UCI, WHERE THE AT LEAST ONE TYPE OF UCI IS MULTIPLEXED IN AT LEAST ONE ACTUAL REPETITION OF THE PUSCH OF THE AT LEAST ONE PUSCH — 320

*FIG. 3*

FIG. 4

EP 4 133 850 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019306922 A1

**Non-patent literature cited in the description**

- **HUAWEI et al.** Corrections on PUSCH enhancement. *3GPP DRAFT, R1-2001028*
- **PANASONIC**. Remaining issues on URLLC PUSCH enhancement. *3GPP DRAFT, R1-2000589*
- **SAMSUNG**. Remaining issues for PUSCH. *3GPP DRAFT, R1-2000627*
- **WILUS INC**. On UCI enhancement and intra-UE prioritization/ multiplexing for NR URLLC. *3GPP DRAFT, R1-1909367*
- **QUALCOMM INCORPORATED**. Remaining issues for multiplexing UCI on PUSCH. *3GPP DRAFT, R1-1802839*
- *3GPP TS 38.213*, March 2020
- *3GPP TS 38.214*, March 2020